# EUROPEAN PATENT APPLICATION

(11) **EP 3 511 754 A1**
(43) Date of publication of application: **17.07.2019**
(21) Application number: 17848405.1
(22) Date of filing: 10.07.2017
(51) Int. Cl.: G02B 7/02, G02B 7/04, G02B 7/10, G03B 7/14

(54) **OPTICAL ELEMENT DRIVING DEVICE, INTERCHANGEABLE LENS, AND IMAGE-CAPTURING DEVICE**

(30) Priority: 06.09.2016 JP 2016173988
(71) Applicant: Sony Corporation, Tokyo 108-0075 (JP)
(72) Inventor: HATTORI, Hisayoshi, Tokyo 108-0075 (JP); OZEKI, Hiroaki, Tokyo 108-0075 (JP); LIU, HUI, Tokyo 108-0075 (JP)
(74) Representative: D Young & Co LLP
(86) International application number: PCT/JP2017/025172
(87) International publication number: WO 2018/047460

(57) **Abstract**

To ensure high operability regarding a manipulation ring, without causing a decline in functionality.

An interlock member configured to be operated by rotational force of a rotationally-manipulated manipulation ring, and operate an optical element by transmitting the rotational force of the manipulation ring to the optical element is included, and a changeover mechanism configured to change over an operation direction of the optical element with respect to a rotation direction of the manipulation ring is provided at least on the interlock member. With this configuration, because an operation direction of the optical element with respect to a rotation direction of the manipulation ring is changed over by the changeover mechanism and the optical element is operated by the rotational force of the manipulation ring that is transmitted by the interlock member, the optical element is operated so as to follow a manipulation performed on the manipulation ring, an operation delay of the optical element rarely occurs, and high operability regarding the manipulation ring can be ensured without causing a decline in functionality.

## Description

### Technical Field

The present technology relates to a technical field regarding an optical element driving device that operates an optical element by rotational force of a rotationally-manipulated manipulation ring, and an interchangeable lens and an imaging device that include the same.

### Background Art

In a structure used in shooting performed by various kinds of imaging devices such as a video camera and a still camera, an interchangeable lens, or the like, an optical system including various kinds of optical elements such as a lens and a lens group is arranged thereinside.

In such a structure, an optical element is moved by an optical element driving device in an optical axis direction (axial direction), and for example, zooming, focusing, or the like is performed. In addition, there also exists a structure in which a blade member such as an iris that is an optical element is operated by an optical element driving device and an amount of light taken into an image sensor is adjusted.

For example, an operation such as zooming and focusing is performed by a manipulation ring such as a zoom ring and a focus ring being rotated, and a lens group or the like being moved in an optical axis direction in accordance with a rotation amount and a rotation direction of the manipulation ring.

In recent years, functionality of the above-described imaging device and interchangeable lens has enhanced and for example, the one enabled to perform not only shooting of a still image but also shooting of a moving image has become widespread. Nevertheless, depending on the types or the like of an imaging device and an interchangeable lens, a function to be executed sometimes varies in accordance with a rotation direction of a manipulation ring.

For example, while there exists a type in which a lens group or the like is moved from a telephoto side to a wide angle side by a manipulation ring being rotated in a clockwise direction, and the lens group or the like is moved from the wide angle side toward the telephoto side by the manipulation ring being rotated in a counterclockwise direction, there exists a type in which the lens group or the like is moved from the telephoto side toward the wide angle side by the manipulation ring being rotated in the counterclockwise direction, and the lens group or the like is moved from the wide angle side toward the telephoto side by the manipulation ring being rotated in the clockwise direction.

In addition, there also exists a type in which, in both shooting times of a still image shooting time and a moving image shooting time, a lens group or the like is moved from the wide angle side toward the telephoto side by a manipulation ring being rotated in one direction.

When a function to be executed varies in accordance with a rotation direction of such a manipulation ring, at the time of use, there is concern that failures are caused such as an erroneous manipulation regarding a rotation direction being performed on a manipulation ring and a shooting chance being missed, and there is a possibility that good operability is not ensured.

In view of the foregoing, for ensuring high operability regarding a manipulation ring, some conventional imaging devices and interchangeable lenses are enabled to change over an operation direction of an optical element with respect to a rotation direction of a manipulation ring (e.g. refer to Patent Literature 1).

An imaging device described in Patent Literature 1 can preset a moving direction of an optical element that corresponds to a rotation direction of a manipulation ring, by manipulating a direction changeover switch. In the imaging device described in Patent Literature 1, at the time of rotation of the manipulation ring, a rotation direction and a rotation amount of the manipulation ring are detected by a detection unit, a drive motor (an actuator) is controlled by a control circuit on the basis of a detection result of the detection unit, and the optical element is moved in an optical axis direction by the drive force of the drive motor. At this time, the optical element is moved in a direction corresponding to a preset direction.

For example, in a case where a moving direction of the optical element is set to be a direction from the telephoto side toward the wide angle side when the manipulation ring is rotated in the clockwise direction by manipulating the direction changeover switch, when the detection unit detects that the manipulation ring is rotated in the clockwise direction, the control circuit controls the drive motor to move the optical element from the telephoto side toward the wide angle side, and the optical element is moved from the telephoto side toward the wide angle side. On the other hand, when the detection unit detects that the manipulation ring is rotated in the counterclockwise direction, the control circuit controls the drive motor to move the optical element from the wide angle side toward the telephoto side, and the optical element is moved from the wide angle side toward the telephoto side.

In this manner, by changing over an operation direction of the optical element with respect to a rotation direction of the manipulation ring, a function corresponding to the intention of a user can be executed, and high operability regarding the manipulation ring can be ensured.

### Citation List

### Patent Literature

Patent Literature 1: JP H6-289475A

### Disclosure of Invention

### Technical Problem

Nevertheless, the imaging device described in Patent Literature 1 has a configuration in which a rotation direction and the like of the manipulation ring are detected by the detection unit and the drive motor is controlled on the basis of the detection result of the detection unit.

Thus, because the detection unit's detection of a rotational manipulation of the manipulation ring and the control of the drive motor that corresponds to the detection result of the detection unit are successively performed, there is a possibility that a delay in control occurs. When such a delay occurs, there is concern that the movement of the optical element does not follow a manipulation performed on the manipulation ring that is performed by the user, and a decline in operability is caused.

In view of the foregoing, the present technology optical element driving device, an interchangeable lens, and an imaging device aim to overcome the above-described shortcomings and ensure high operability regarding a manipulation ring, without causing a decline in functionality.

### Solution to Problem

First, an optical element driving device according to the present technology includes: an interlock member configured to be operated by rotational force of a rotationally-manipulated manipulation ring, and operate an optical element by transmitting rotational force of the manipulation ring to the optical element. A changeover mechanism configured to change over an operation direction of the optical element with respect to a rotation direction of the manipulation ring is provided at least on the interlock member.

With this configuration, an operation direction of the optical element with respect to a rotation direction of the manipulation ring is changed over by the changeover mechanism, and the optical element is operated by the rotational force of the manipulation ring that is transmitted by the interlock member.

Second, in the optical element driving device according to the present technology described above, it is desirable that settings of an operation mode in which the optical element is operated by rotating the manipulation ring, and a changeover transition mode in which an operation direction of the optical element is changed over by rotating the manipulation ring are enabled, and a mode change switch configured to perform changing between the operation mode and the changeover transition mode is provided.

With this configuration, mode changing between the operation mode and the changeover transition mode is performed by manipulating the mode change switch.

Third, in the optical element driving device according to the present technology described above, it is desirable that the manipulation ring includes an external ring and an internal ring positioned on an inside of the external ring, the external ring and the internal ring are made integrally rotatable in the operation mode, and by the external ring being rotated with respect to the internal ring in the changeover transition mode, the changeover mechanism is operated.

With this configuration, a rotation state of the external ring with respect to the internal ring is changed by manipulating the mode change switch and an operation state of the changeover mechanism is changed.

Fourth, in the optical element driving device according to the present technology described above, it is desirable that the internal ring is made movable between a first position and a second position in a direction different from the rotation direction with respect to the external ring in the changeover transition mode, and an operation direction of the optical element is changed over in accordance with a movement position of the internal ring.

With this configuration, an operation direction of the optical element is changed over by the internal ring being moved to the first position or the second position.

Fifth, in the optical element driving device according to the present technology described above, it is desirable that a cam groove is formed in one of the external ring and the internal ring, and a cam pin to be slidably engaged with the cam groove is provided on another one thereof, and the internal ring is moved between the first position and the second position by a change in position of the cam pin with respect to the cam groove that is caused by rotation of the external ring with respect to the internal ring.

With this configuration, by the external ring being rotated with respect to the internal ring and a position of the cam pin with respect to the cam groove being changed, the internal ring is moved to the first position or the second position.

Sixth, in the optical element driving device according to the present technology described above, it is desirable that a fixing member that includes a reverse gear and is configured to rotatably support the interlock member is provided, a transmission gear that can be meshed with the reverse gear is formed on the manipulation ring, the manipulation ring and the interlock member are rotated in opposite directions in a state in which the transmission gear is meshed with the reverse gear, and the manipulation ring and the interlock member are rotated in a same direction in a state in which the transmission gear is not meshed with the reverse gear.

With this configuration, between a state in which the transmission gear is meshed with the reverse gear and a state in which the transmission gear is not meshed with the reverse gear, rotation directions of the interlock member with respect to a rotation direction of the manipulation ring are made opposite directions.

Seventh, in the optical element driving device according to the present technology described above, it is desirable that the interlock member is provided with an interlock pin that can be coupled with the manipulation ring, the interlock member is rotated integrally with the manipulation ring in a state in which the interlock pin is coupled with the manipulation ring, and the transmission gear is meshed with the reverse gear in a state in which coupling of the interlock pin with the manipulation ring is released.

With this configuration, between a state in which the interlock pin is coupled to the manipulation ring and a state in which coupling of the interlock pin with the manipulation ring is released and the transmission gear is meshed with the reverse gear, rotation directions of the interlock member with respect to a rotation direction of the manipulation ring are made opposite directions.

Eighth, in the optical element driving device according to the present technology described above, it is desirable that a driving gear meshed with the reverse gear is formed on the interlock member, and the rotational force of the manipulation ring is transmitted to the interlock member via the transmission gear and the reverse gear in a state in which the transmission gear is meshed with the reverse gear.

With this configuration, in a state in which the transmission gear is meshed with the reverse gear and the driving gear is meshed with the reverse gear, the rotational force of the manipulation ring is transmitted to the interlock member via the transmission gear and the reverse gear.

Ninth, in the optical element driving device according to the present technology described above, it is desirable that the transmission gear is formed into a shape extending in the rotation direction, and the transmission gear is positioned on an outside of the driving gear in a state in which the transmission gear is meshed with the reverse gear.

With this configuration, in a state in which the transmission gear is meshed with the reverse gear and the driving gear is meshed with the reverse gear, the transmission gear formed into a ring shape is positioned on the outside of the driving gear.

Tenth, in the optical element driving device according to the present technology described above, it is desirable that the optical element is made operable in a first direction and a second direction which are opposite to each other, by the manipulation ring being rotated in one direction in a first rotational manipulation range, the optical element is operated in the first direction, and by the manipulation ring being rotated in another direction in the first rotational manipulation range, the optical element is operated in the second direction, and by the manipulation ring being rotated in one direction in a second rotational manipulation range, the optical element is operated in the second direction, and by the manipulation ring being rotated in another direction in the second rotational manipulation range, the optical element is operated in the first direction.

With this configuration, by the manipulation ring being rotated in different rotational manipulation ranges, the optical element is operated in opposite directions.

Eleventh, in the optical element driving device according to the present technology described above, it is desirable that, on the manipulation ring, calibrations indicating the first rotational manipulation range and the second rotational manipulation range are added at positions distant in the rotation direction.

With this configuration, calibrations indicating the respective rotational manipulation ranges are present at positions distant in the rotation direction.

Twelfth, in the optical element driving device according to the present technology described above, it is desirable that the manipulation ring is made rotatable in a first rotation direction and a second rotation direction which are opposite to each other, the optical element is made operable in a first direction and a second direction which are opposite to each other, changeover between a first operation mode and a second operation mode is performed by the changeover mechanism, in the first operation mode, the optical element is operated in the first direction when the manipulation ring is rotated in the first rotation direction, and the optical element is operated in the second direction when the manipulation ring is rotated in the second rotation direction, and in the second operation mode, the optical element is operated in the second direction when the manipulation ring is rotated in the first rotation direction, and the optical element is operated in the first direction when the manipulation ring is rotated in the second rotation direction.

With this configuration, between the first operation mode and the second operation mode, the optical element is operated in opposite directions with respect to the same rotation direction of the manipulation ring.

Thirteenth, in the optical element driving device according to the present technology described above, it is desirable that a lens or a lens group is provided as the optical element, a shooting state of a moving image is set as the first operation mode, and a shooting state of a still image is set as the second operation mode.

With this configuration, between a still image shooting time and a moving image shooting time, the optical element is moved in opposite directions.

Fourteenth, the optical element driving device according to the present technology described above, it is desirable that changeover between a manual state in which the optical element is operated by a manual rotational manipulation of the manipulation ring, and an automatic state in which the optical element is operated by drive force generated by a drive motor is enabled, a detection unit configured to detect the first operation mode and the second operation mode is provided, and an operation speed of the optical element in the automatic state is controlled on the basis of a detection result of the detection unit.

With this configuration, in the first operation mode and the second operation mode, it becomes possible to perform optimum control in the automatic state regarding operation speeds of the optical element and a focus lens group.

Fifteenth, in the optical element driving device according to the present technology described above, it is desirable that changeover between a manual state in which the optical element is operated by a manual rotational manipulation of the manipulation ring, and an automatic state in which the optical element is operated by drive force generated by a drive motor is enabled, a zooming lens or lens group is provided as the optical element, a detection unit configured to detect the first operation mode and the second operation mode is provided, and control of causing the first operation mode to decline in an operation speed of the optical element in the automatic state, with respect to that in the second operation mode is performed on the basis of a detection result of the detection unit.

With this configuration, control of causing the first operation mode to decline in the operation speed of the optical element, with respect to that in the second operation mode is performed, and it becomes possible to ensure a high quality shot image in a shooting state of a moving image and it becomes possible to ensure a prompt shooting chance in a shooting state of a still image.

Sixteenth, in the optical element driving device according to the present technology described above, it is desirable that changeover between a manual state in which the optical element is operated by a manual rotational manipulation of the manipulation ring, and an automatic state in which the optical element is operated by drive force generated by a drive motor is enabled, a focusing lens or lens group is provided as the optical element, a detection unit configured to detect the first operation mode and the second operation mode is provided, and control of causing the first operation mode to decline in an operation speed of the optical element in the automatic state, with respect to that in the second operation mode is performed on the basis of a detection result of the detection unit.

With this configuration, control of causing the first operation mode to decline in the operation speed of the focus lens group, with respect to that in the second operation mode is performed, and it becomes possible to ensure a high quality shot image in a shooting state of a moving image and it becomes possible to ensure a prompt shooting chance in a shooting state of a still image.

Seventeenth, in the optical element driving device according to the present technology described above, it is desirable that changeover between a manual state in which the optical element is operated by a manual rotational manipulation of the manipulation ring, and an automatic state in which the optical element is operated by drive force generated by a drive motor is enabled, an iris blade is provided as the optical element, a detection unit configured to detect the first operation mode and the second operation mode is provided, and control of causing the first operation mode to decline in an operation speed of the optical element in the automatic state, with respect to that in the second operation mode is performed on the basis of a detection result of the detection unit.

With this configuration, control of causing the first operation mode to decline in the operation speed of the iris blade, with respect to that in the second operation mode is performed, and it becomes possible to ensure a high quality shot image in a shooting state of a moving image and it becomes possible to ensure a prompt shooting chance in a shooting state of a still image.

Eighteenth, in the optical element driving device according to the present technology described above, it is desirable that a first operation portion configured to operate the optical element in the first operation mode and a second operation portion configured to operate the optical element in the second operation mode are formed on the interlock member.

With this configuration, in the first operation mode and the second operation mode, the optical element is moved in each direction by the first operation portion and the second operation portion, respectively, in accordance with a rotation direction of the interlock member.

Nineteenth, the optical element driving device according to the present technology described above, it is desirable that a cam ring to be rotated in a same direction as the manipulation ring is provided as the interlock member, and the first operation portion and the second operation portion are formed into symmetric shapes at a distance in a rotation direction of the interlock member.

With this configuration, in the first operation mode and the second operation mode, the optical element is moved in each direction by the first operation portion and the second operation portion, respectively, that are formed into symmetric shapes at a distance in the rotation direction of the interlock member.

Twentieth, an interchangeable lens according to the present technology includes: an optical element driving device configured to drive an optical element and arranged inside a cylindrical casing. The optical element driving device includes an interlock member configured to be operated by rotational force of a rotationally-manipulated manipulation ring, and operate the optical element by transmitting rotational force of the manipulation ring to the optical element, and a changeover mechanism configured to change over an operation direction of the optical element with respect to a rotation direction of the manipulation ring is provided at least on the interlock member.

With this configuration, in the optical element driving device, an operation direction of the optical element with respect to a rotation direction of the manipulation ring is changed over by the changeover mechanism and the optical element is operated by the rotational force of the manipulation ring that is transmitted by the interlock member.

Twenty-first, an imaging device according to the present technology includes: an optical element driving device configured to drive an optical element, and an image sensor configured to convert an optical image captured via an optical system into an electrical signal. The optical element driving device includes an interlock member configured to be operated by rotational force of a rotationally-manipulated manipulation ring, and operate the optical element by transmitting rotational force of the manipulation ring to the optical element, and a changeover mechanism configured to change over an operation direction of the optical element with respect to a rotation direction of the manipulation ring is provided at least on the interlock member.

With this configuration, in the optical element driving device, an operation direction of the optical element with respect to a rotation direction of the manipulation ring is changed over by the changeover mechanism and the optical element is operated by the rotational force of the manipulation ring that is transmitted by the interlock member.

### Advantageous Effects of Invention

According to the present technology, because an operation direction of the optical element with respect to a rotation direction of the manipulation ring is changed over by the changeover mechanism and the optical element is operated by the rotational force of the manipulation ring that is transmitted by the interlock member, the optical element is operated so as to follow a manipulation performed on the manipulation ring, an operation delay of the optical element rarely occurs, and high operability regarding the manipulation ring can be ensured without causing a decline in functionality.

Note that the effects described in this specification are merely exemplifications and are not limited, and other effects may be caused.

### Brief Description of Drawings

FIG. 1 illustrates an embodiment of the present technology optical element driving device, an interchangeable lens, and an imaging device together with FIGS. 2 to 27, and this drawing is a perspective view of an imaging device that illustrates an interchangeable lens and a device main body in a separated state.
FIG. 2 is a side view illustrating the interchangeable lens.
FIG. 3 is an exploded perspective view illustrating a structure of the interchangeable lens in a partially-omitted manner.
FIG. 4 is a perspective view illustrating a structure of the interchangeable lens in a partially-omitted manner.
FIG. 5 is a side view of a fixing member.
FIG. 6 is a developed view illustrating a relationship between an index portion and a mark.
FIG. 7 is an exploded perspective view of a second manipulation ring.
FIG. 8 is a side view of an internal ring.
FIG. 9 is a rear view of the internal ring.
FIG. 10 is a front view of the internal ring.
FIG. 11 illustrates an operation in the interchangeable lens together with FIGS. 12 to 17, and this drawing is a schematic diagram illustrating a state in which the second manipulation ring is rotated in a first operation mode.
FIG. 12 is a schematic diagram illustrating a state immediately before a setting from the first operation mode to a changeover transition mode is performed, subsequently to FIG. 11.
FIG. 13 is a schematic diagram illustrating a state in which a mode change switch is manipulated and a setting from the first operation mode to the changeover transition mode is performed, subsequently to FIG. 12.
FIG. 14 is a schematic diagram illustrating a state in which the second manipulation ring is rotated in the changeover transition mode, subsequently to FIG. 13.
FIG. 15 is a schematic diagram illustrating a state immediately before a setting from the changeover transition mode to a second operation mode is performed, subsequently to FIG. 14.
FIG. 16 is a schematic diagram illustrating a state in which the mode change switch is manipulated and a setting from the changeover transition mode to the second operation mode is performed, subsequently to FIG. 15.
FIG. 17 is a schematic diagram illustrating a state in which the second manipulation ring is rotated in the second operation mode.
FIG. 18 is a diagram illustrating a configuration example of a control system and the like.
FIG. 19 is a flow chart illustrating control performed in a zooming operation.
FIG. 20 is a flow chart illustrating control performed in a focusing operation.
FIG. 21 illustrates a modified example of the changeover mechanism together with FIGS. 22 to 26, and this drawing is a schematic diagram illustrating a configuration of the changeover mechanism.
FIG. 22 is a developed view of an interlock member.
FIG. 23 is a schematic diagram illustrating a state in which the second manipulation ring is rotated in the first operation mode.
FIG. 24 is a schematic diagram illustrating a state immediately before a setting from the first operation mode to the changeover transition mode is performed.
FIG. 25 is a schematic diagram illustrating a state in which the mode change switch is manipulated and a setting from the changeover transition mode to the second operation mode is performed.
FIG. 26 is a schematic diagram illustrating a state in which the second manipulation ring is rotated in the second operation mode.
FIG. 27 is a block diagram of the imaging device.

### Mode(s) for Carrying Out the Invention

Hereinafter, a mode for carrying out the present technology will be described with reference to the appended drawings.

An embodiment described below is obtained by applying the present technology imaging device to a still camera, applying the present technology interchangeable lens to an interchangeable lens detachably attached to a device main body of the still camera, and applying the present technology optical element driving device to an optical element driving device provided in the interchangeable lens.

Note that an application range of the present technology is not limited to a still camera, an interchangeable lens detachably attached to a device main body of the still camera, and an optical element driving device provided in the interchangeable lens detachably attached to the device main body of the still camera. The present technology can be widely applied to, for example, various kinds of imaging devices installed on a video camera or other devices as an imaging device, an interchangeable lens detachably attached to a device main body of these imaging devices, and an optical element driving device provided in the interchangeable lens detachably attached to the device main body of these imaging devices.

In the following description, front, back, up, down, left, and right directions are indicated in a direction viewed from a photographer at the time of shooting of a still camera. Thus, an object side becomes an anterior side and an image plane side becomes a posterior side.

Note that the front, back, up, down, left, and right directions are described below for the sake of convenience of the description, and in the execution of the present technology, a direction is not limited to these directions.

In addition, a lens group described below includes a single or a plurality of lenses, and aside from the lens group, a lens group may include the single or the plurality of lenses and other optical elements such as a diaphragm and an iris.

### <Configuration of Imaging Device>

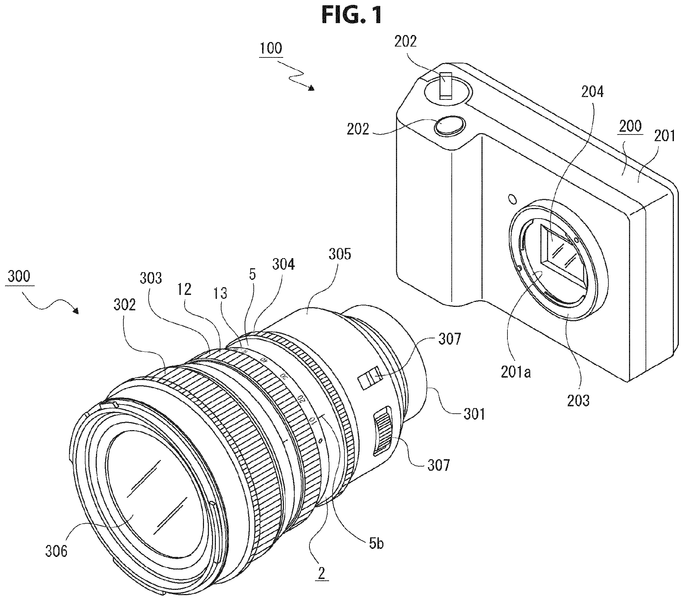

An imaging device 100 includes a device main body 200 and an interchangeable lens 300 (refer to FIG. 1). Note that the present technology can also be applied to a type in which a lens barrel having a structure similar to an internal structure of the interchangeable lens 300 is incorporated into a device main body, and a retractable type in which the lens barrel is protruding with respect to or accommodated in a device main body.

The device main body 200 includes required portions arranged on the inside and outside of an outer casing 201.

On the top surface and the rear surface of the outer casing 201, for example, various kinds of manipulation portions 202, 202, and so on are arranged. As the manipulation portions 202, 202, and so on, for example, a power button, a shutter button, a zoom knob, a mode changeover knob, and the like are provided.

On the rear surface of the outer casing 201, a display (display unit) (not illustrated) is arranged.

On the front surface of the outer casing 201, a circular-shaped opening 201a is formed, and a circumferential portion of the opening 201a is provided as a mount portion 203 for attaching the interchangeable lens 300.

On the inside of the outer casing 201, an image sensor 204 such as a charge coupled device (CCD) and a complementary metal-oxide semiconductor (CMOS) is arranged and the image sensor 204 is positioned posteriorly to the opening 201a.

### <Configuration of Interchangeable Lens>

The interchangeable lens 300 is an interchangeable lens for a digital camera equipped with an interchangeable lens, for example.

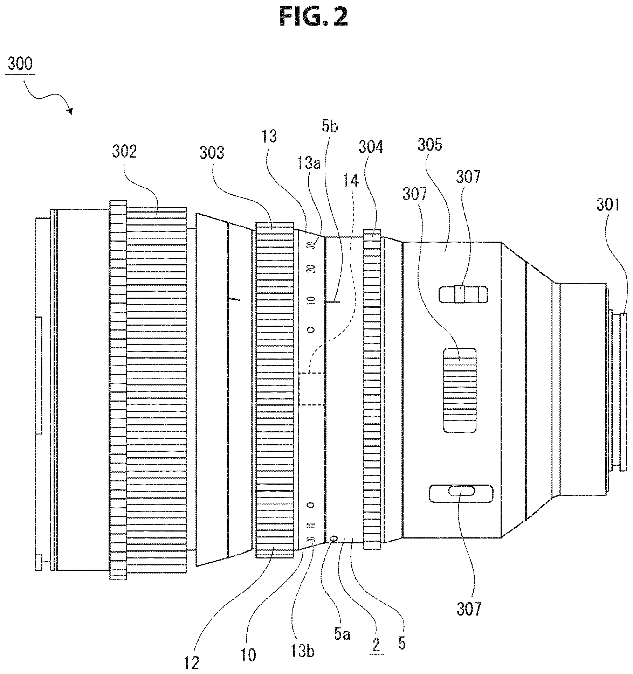

At the rear end portion of the interchangeable lens 300, for example, a lens mount 301 to be bayonet-coupled to the mount portion 203 of the device main body 200 is provided (refer to FIGS. 1 and 2). The interchangeable lens 300 is provided with a first manipulation ring 302 functioning as a focus ring, a second manipulation ring 303 functioning as a zoom ring, and a third manipulation ring 304 functioning as an iris ring. By the first manipulation ring 302 being rotationally manipulated, manual focusing is performed, by the second manipulation ring 303 being rotationally manipulated, manual zooming is performed, and by the third manipulation ring 304 being rotationally manipulated, an iris blade (not illustrated) is operated and the adjustment of an amount of light taken into the interchangeable lens 300 is performed.

The interchangeable lens 300 includes a casing 305 formed into a substantially cylindrical shape and a shooting lens 306 arranged on the forefront side. The first manipulation ring 302, the second manipulation ring 303, and the third manipulation ring 304 are rotatably supported on an external surface side of the casing 305, and for example, the first manipulation ring 302, the second manipulation ring 303, and the third manipulation ring 304 are positioned in order from the front side.

At a position close to the rear end of the casing 305, a plurality of manipulation knobs 307, 307, and so on are arranged at a distance in a circumferential direction. As the manipulation knobs 307, 307, and so on, for example, an image stabilization knob for changing over on/off of image stabilization driving, a power zoom knob for performing zooming by motor driving, a state changeover knob for changing over a manual state and an automatic state, and the like are provided. By manipulating a mode changeover knob, for example, focusing and zooming are enabled to be performed by a manual rotational manipulation of the first manipulation ring 301 and the second manipulation ring 302.

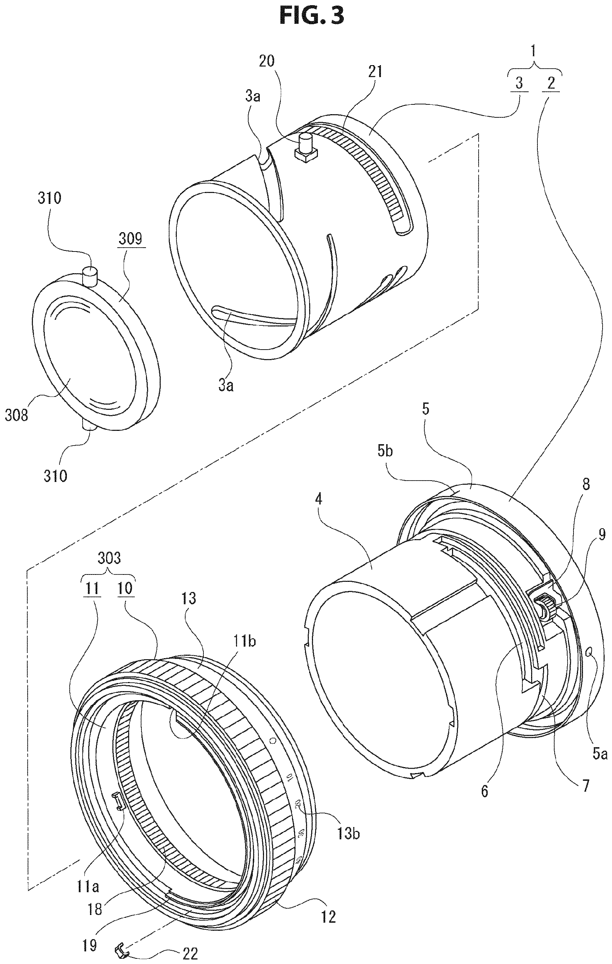

An optical element 308 is arranged inside the casing 305 (refer to FIG. 3). The optical element 308 is, for example, a zoom lens or a zoom lens group, and is held by a holder 309. In addition, other optical elements such as a focus lens group (not illustrated) and an iris blade (not illustrated) are also arranged inside the casing 305. The holder 309 is provided with at least one cam follower 310 protruding outward.

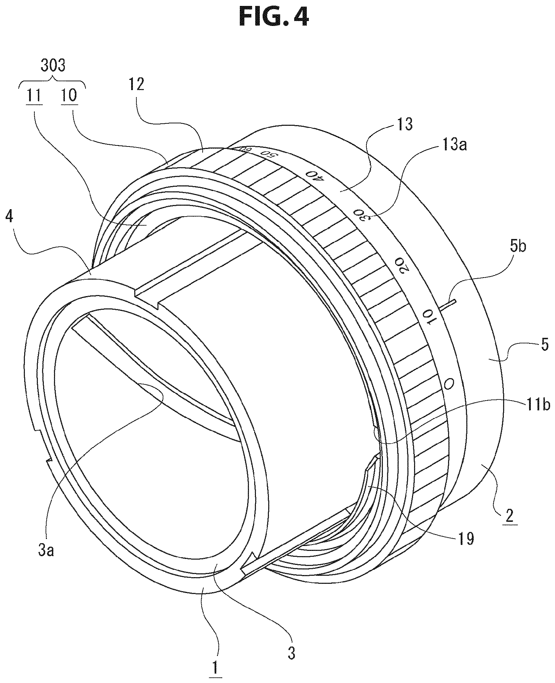

The interchangeable lens 300 is provided with an optical element driving device 1 (refer to FIGS. 3 and 4). The optical element driving device 1 includes a fixing member 2 and an interlock member 3. As the fixing member 2, for example, a fixing ring fixed on the casing 305 is used, and as the interlock member 3, for example, a cam ring rotatable in a circumferential direction (axial rotation direction) is used.

In the interchangeable lens 300, a changeover mechanism that changes over an operation direction of the optical element 308 with respect to a rotation direction of the second manipulation ring 303 and sets a first operation mode and a second operation mode, which will be described later, is provided at least on the interlock member 3. Note that, in addition to the interlock member 3, the changeover mechanism may also be provided on the fixing member 2 and another structural member such as each manipulation ring.

The fixing member 2 has an axial direction corresponding to a front-back direction, and includes a support cylindrical portion 4 formed into a substantially cylindrical shape, and a flange-shaped projecting portion 5 projecting outward from a rear end portion of the support cylindrical portion 4 (refer to FIGS. 3 to 5).

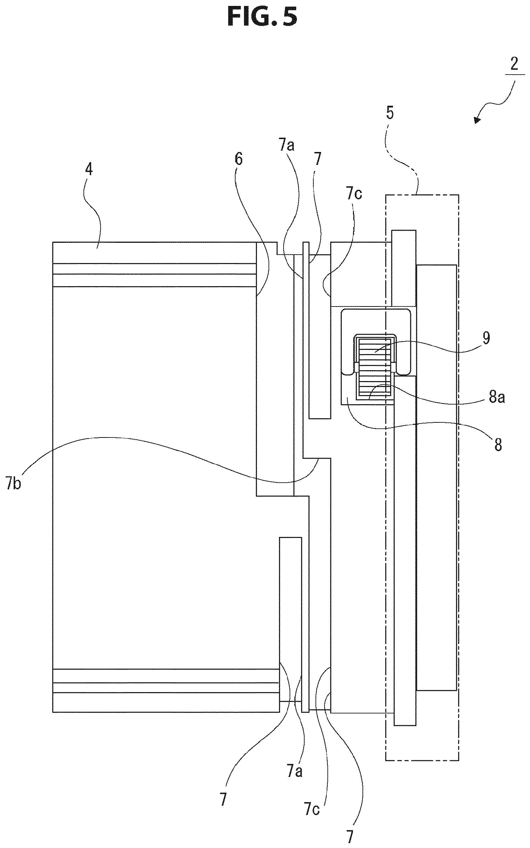

In the support cylindrical portion 4, an insertion hole 6 extending in the circumferential direction is formed. In the support cylindrical portion 4, key movement grooves 7, 7, and 7 are formed in the circumferential direction (refer to FIGS. 3 and 5). The key movement grooves 7 include a first movement portion 7a extending in the circumferential direction, a translation portion 7b connecting to the first movement portion 7a and extending short in the front-back direction, and a second movement portion 7c connecting to the translation portion 7b and extending in the circumferential direction, and the translation portion 7b has a front end portion connected to the first movement portion 7a and a rear end portion connected to the second movement portion 7c. Thus, the first movement portion 7a is positioned on the front side of the second movement portion 7c.

A gear support portion 8 is provided at the rear end portion of the support cylindrical portion 4, and an arrangement hole 8a is formed in the gear support portion 8. A reverse gear 9 is rotatably supported on the gear support portion 8 in a state of being arranged in the arrangement hole 8a.

The projecting portion 5 has marks 5a, 5b, and 5c arranged at a distance in the circumferential direction (refer to FIGS. 3, 4, and 6).

In a state in which the fixing member 2 is fixed to the casing 305, the projecting portion 5 is positioned on the front side of the third manipulation ring 304.

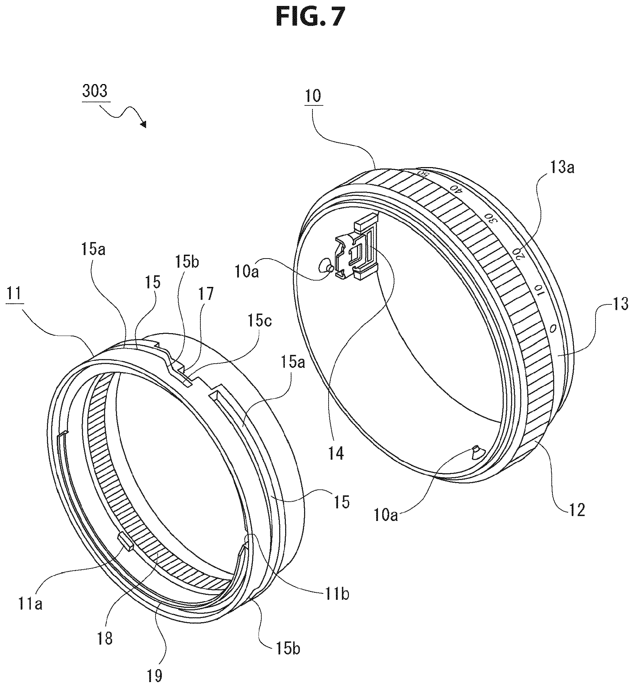

On the outer circumferential surface side of the support cylindrical portion 4 in the fixing member 2, the above-described second manipulation ring 303 is rotatably supported (refer to FIGS. 3 and 4). The second manipulation ring 303 includes an external ring 10 and an internal ring 11 (refer to FIGS. 3 and 7).

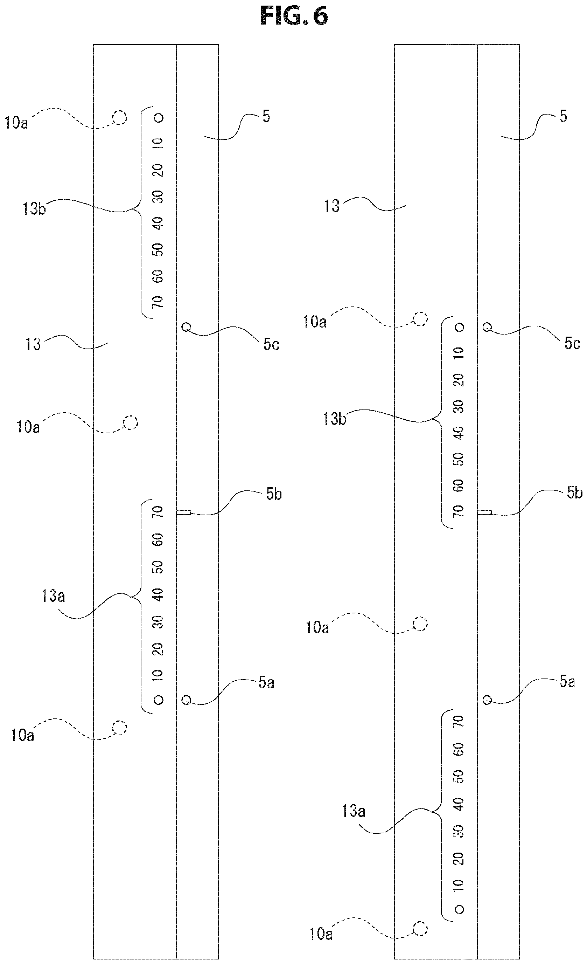

The external ring 10 is formed into a substantially circular ring shape, and a manipulation portion 12 is provided at a front side portion and an index portion 13 is provided at a rear side portion. An outer circumferential surface of the manipulation portion 12 is formed to have protrusions and recesses. The index portion 13 includes a first index 13a and a second index 13b (refer to FIGS. 6 and 7).

Both of the first index 13a and the second index 13b are focal length displays, for example, and have a plurality of calibrations, and one is a focal length display in a shooting state of a moving image and the other is a focal length display in a shooting state of a still image (refer to FIG. 6). In the shooting state of a moving image, a case where a mark 5a and a mark 5b respectively coincide with calibrations at both ends of the first index 13a corresponds to a state of a telephoto end, for example (refer to the left side in FIG. 6), and in the shooting state of a still image, a case where the mark 5b and a mark 5c respectively coincide with calibrations at both ends of the second index 13b corresponds to a state of the telephoto end, for example (refer to the right side in FIG. 6).

In the shooting state of a moving image, the first operation mode, which will be described later, is set, and when the second manipulation ring 303 is rotationally manipulated in a counterclockwise direction (first rotation direction) when viewed from an image plane side (photographer side), the optical element 308 is moved in a first direction directed from a wide angle side toward a telephoto side, and when the second manipulation ring 303 is rotationally manipulated in a clockwise direction (second rotation direction), the optical element 308 is moved in a second direction directed from the telephoto side toward the wide angle side. On the other hand, in the shooting state of a still image, the second operation mode, which will be described later, is set, and when the second manipulation ring 303 is rotationally manipulated in the clockwise direction when viewed from the image plane side (photographer side), the optical element 308 is moved from the wide angle side toward the telephoto side, and when the second manipulation ring 303 is rotationally manipulated in the counterclockwise direction, the optical element 308 is moved from the telephoto side toward the wide angle side.

On the external ring 10, a mode change switch 14 is arranged (refer to FIG. 7). A pressing manipulation of the mode change switch 14 enables setting changeover between an operation mode in which the optical element 308 is moved by the rotation of the second manipulation ring 303 and zooming is performed, and a changeover transition mode in which a moving direction of the optical element 308 is changed over by the rotation of the second manipulation ring 303.

The operation mode includes, for example, the first operation mode being the shooting state of a moving image and the second operation mode being the shooting state of a still image. In the first operation mode, as described above, by rotationally manipulating the second manipulation ring 303 in the counterclockwise direction, the optical element 308 is moved from the wide angle side toward the telephoto side, and by rotationally manipulating the second manipulation ring 303 in the clockwise direction, the optical element 308 is moved from the telephoto side toward the wide angle side. In the second operation mode, as described above, by rotationally manipulating the second manipulation ring 303 in the clockwise direction, the optical element 308 is moved from the wide angle side toward the telephoto side, and by rotationally manipulating the second manipulation ring 303 in the counterclockwise direction, the optical element 308 is moved from the telephoto side toward the wide angle side.

The changeover transition mode is a mode set when a changeover work of changing over an operation direction of the optical element 308 with respect to the second manipulation ring 303 is performed, and by performing the changeover work in the changeover transition mode, the first operation mode and the second operation mode are changed over.

On an inner circumferential surface of the external ring 10, cam pins 10a, 10a, and 10a protruding inward are provided at a distance in the circumferential direction.

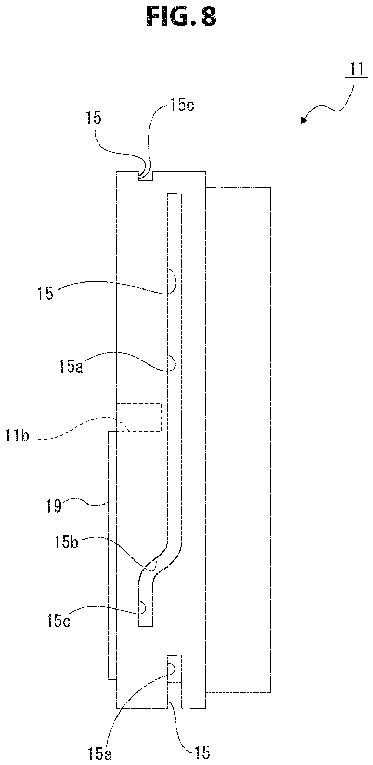

The internal ring 11 is formed into a substantially circular ring shape having a diameter a bit smaller than that of the external ring 10, and is positioned on the inside of the external ring 10. On an outer circumferential surface of the internal ring 11, cam grooves 15, 15, and 15 are formed at a distance in the circumferential direction (refer to FIGS. 7 and 8). The cam grooves 15 include a first linear portion 15a extending in the circumferential direction, an inclined portion 15b connecting to the first linear portion 15a and being displaced forward as getting away from the first linear portion 15a, and a second linear portion 15c connecting to the inclined portion 15b and extending in the circumferential direction, and the first linear portion 15a has a length in the circumferential direction that is longer than that of the second linear portion 15c.

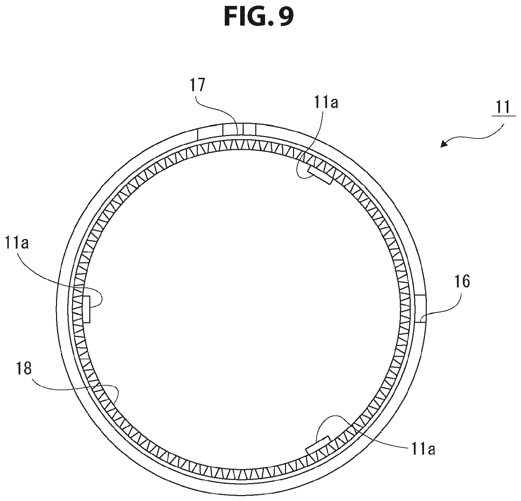

On the outer circumferential surface of the internal ring 11, a first lock groove 16 and a second lock groove 17 are formed at a distance in the circumferential direction (refer to FIGS. 7 and 9). The first lock groove 16 and the second lock groove 17 are portions into which the mode change switch 14 arranged on the external ring 10 is to be inserted. In a state in which the mode change switch 14 is inserted into the first lock groove 16, the external ring 10 and the internal ring 11 are locked, the both rings are made integrally rotatable, and the first operation mode is set, and in a state in which the mode change switch 14 is inserted into the second lock groove 17, the external ring 10 and the internal ring 11 are locked, the both rings are made integrally rotatable, and the second operation mode is set. In a state in which the mode change switch 14 is inserted into neither of the first lock groove 16 and the second lock groove 17, the internal ring 11 is made rotatable with respect to the external ring 10 and the changeover transition mode is set.

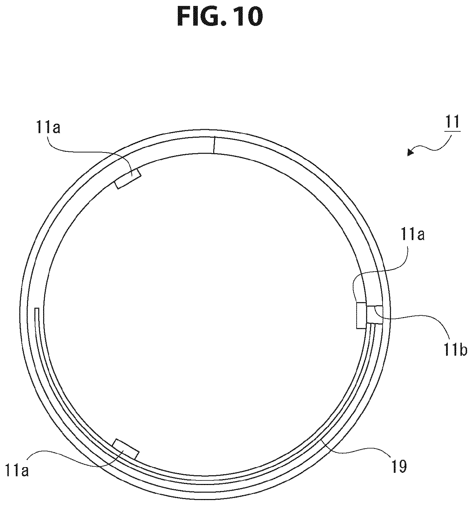

On the inner circumferential surface of the internal ring 11, ring keys 11a, 11a, and 11a protruding inward are provided at a distance in the circumferential direction (refer to FIGS. 7 and 10). On the inner circumferential surface of the internal ring 11, a pin engagement groove 11b opened inward and forward is formed.

The internal ring 11 is supported by the external ring 10 by the cam pins 10a, 10a, and 10a being slidably engaged with the cam grooves 15, 15, and 15, respectively. In a state in which the internal ring 11 is supported by the external ring 10, by the mode change switch 14 being inserted into the first lock groove 16 or the second lock groove 17, the external ring 10 and the internal ring 11 are locked and the both rings are made integrally rotatable, and by the mode change switch 14 being inserted into neither of the first lock groove 16 and the second lock groove 17, the internal ring 11 is made movable in the circumferential direction and movable in the front-back direction with respect to the external ring 10.

Note that the above description has been given of an example in which the cam pins 10a are provided on the external ring 10, and the cam grooves 15 with which the cam pins 10a are to be engaged are formed in the internal ring 11. In contrast, cam pins may be provided on an internal ring and cam grooves may be formed in an external ring.

At a position close to a rear end on the inner circumferential surface of the internal ring 11, a circular ring-shaped transmission gear 18 serving as a rack gear or an internal gear is formed (refer to FIG. 7).

At an outer circumferential portion in a front end portion of the internal ring 11, a light-shielding fin 19 protruding forward is provided. The light-shielding fin 19 is formed into an arc shape.

In a state in which the second manipulation ring 303 is rotatably supported on the support cylindrical portion 4 of the fixing member 2, when the internal ring 11 is moved backward with respect to the external ring 10, the transmission gear 18 of the internal ring 11 is meshed with the reverse gear 9 of the fixing member 2.

The interlock member 3 is formed into a substantially cylindrical shape having an axial direction corresponding to the front-back direction (refer to FIGS. 3 and 4). Note that the interlock member 3 is not limited to a cam ring, and may be, for example, a helicoid, a cam plate, or the like.

The interlock member 3 is supported on the support cylindrical portion 4 of the fixing member 2 so as to be rotatable in an axial rotation direction. The interlock member 3 is positioned on an inner circumferential side of the support cylindrical portion 4, and includes cam holes 3a and 3a. The cam hole 3a is inclined so as to be displaced in the front-back direction as advancing in the circumferential direction.

The interlock member 3 is provided with an interlock pin 20 protruding outward. At a position close to the rear end on the outer circumferential surface of the interlock member 3, an arc-shaped driving gear 21 serving as a rack gear or an internal gear is formed.

In a state in which the interlock member 3 is arranged inside the support cylindrical portion 4 of the fixing member 2, the interlock pin 20 is inserted into the insertion hole 6. Thus, the interlock member 3 is made rotatable in the axial rotation direction with respect to the fixing member 2 in a movable range in the circumferential direction of the interlock pin 20 with respect to the insertion hole 6, and made unmovable in the front-back direction with respect to the fixing member 2.

In the interlock member 3, the driving gear 21 is meshed with the reverse gear 9. Thus, when the interlock member 3 is rotated in the axial rotation direction with respect to the fixing member 2, the reverse gear 9 is rotated in a direction corresponding to the rotation direction of the interlock member 3.

The interchangeable lens 300 is provided with a direct advance ring (not illustrated), and the direct advance ring is positioned on the inside of the interlock member 3, for example. A pair of guide holes extending in the front-back direction is formed in the direct advance ring.

On the interlock member 3 and the direct advance ring, the holder 309 holding the optical element 308 is supported, and the cam followers 310 and 310 of the holder 309 are slidably engaged with the guide holes of the direct advance ring and the cam holes 3a and 3a of the interlock member 3, respectively. Thus, when the interlock member 3 is rotated in the axial rotation direction with respect to the fixing member 2, engagement positions of the cam followers 310 and 310 with respect to the cam holes 3a and 3a are changed and the cam followers 310 and 310 are guided into the guide holes, and the optical element 308 and the holder 309 are moved in the front-back direction (optical axis direction) in accordance with the rotation direction of the interlock member 3.

Note that the above description has been given of an example in which the optical element 308 is guided in the front-back direction using the direct advance ring but the optical element 308 can also be configured to be moved in the following manner. For example, the direct advance ring is not provided, a guide shaft is provided on one of the fixing member 2 and the interlock member 3 and a shaft sleeve is formed on the other one thereof, and the guide shaft and the shaft sleeve are slidably engaged. The interlock member 3 is thereby guided to the fixing member 2 and the optical element 308 is moved in the front-back direction (optical axis direction).

The interchangeable lens 300 is provided with a detection unit 22 (refer to FIG. 3). As the detection unit 22, for example, a photointerrupter is used. The detection unit 22 is fixed on the inner circumferential surface of the casing 305, for example. In a state in which the internal ring 11 is not moved backward with respect to the external ring 10, the light-shielding fin 19 provided on the internal ring 11 is positioned on the inside of the detection unit 22 in state of being partially inserted.

### <Operation in Interchangeable Lens>

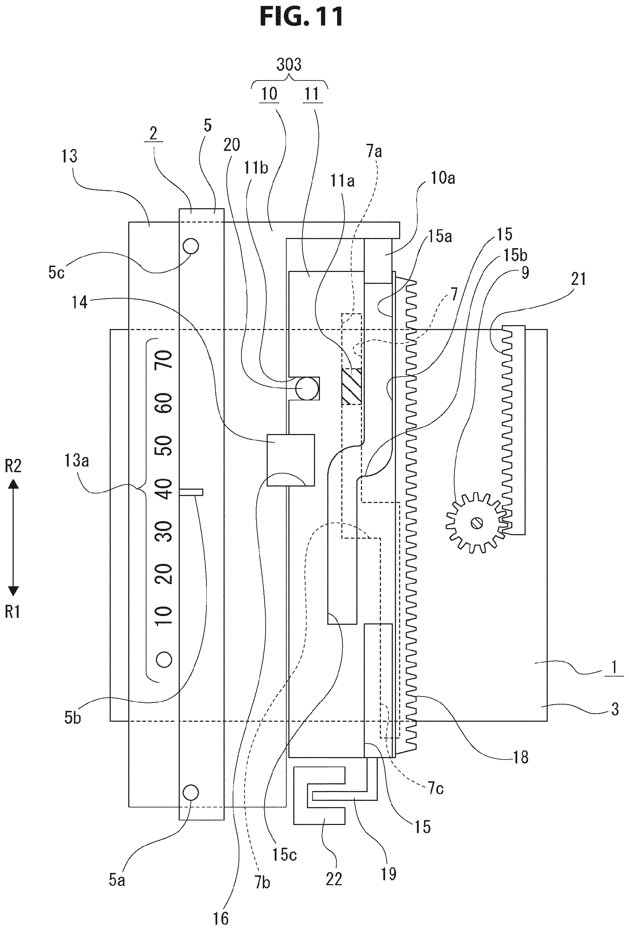

Hereinafter, an operation performed when the second manipulation ring 303 is rotationally manipulated in the interchangeable lens 300 will be described (refer to FIGS. 11 to 17). Note that FIGS. 11 to 17 are diagrams conceptually illustrating a positional relationship between portions, and the like for facilitating the understanding of an operation in the interchangeable lens 300.

In the interchangeable lens 300, as described above, the settings of the operation mode in which the optical element 308 is moved by the rotation of the second manipulation ring 303 and zooming is performed, and the changeover transition mode in which a moving direction of the optical element 308 is changed over by the rotation of the second manipulation ring 303 are enabled.

The operation mode includes the first operation mode being a shooting state of a moving image and the second operation mode being a shooting state of a still image.

Hereinafter, an operation performed when changeover between the first operation mode and the second operation mode is performed in the changeover transition mode will be mainly described.

In the operation mode, for example, in the first operation mode, the mode change switch 14 arranged on the external ring 10 is inserted into the first lock groove 16 formed in the internal ring 11 (refer to FIG. 11). Thus, the external ring 10 and the internal ring 11 are locked and brought into an integrally-rotatable state.

The interlock member 3 is engaged by the interlock pin 20 inserted into the insertion hole 6 of the fixing member 2 being inserted into the pin engagement groove 11b of the internal ring 11, and brought into a state of being rotatable integrally with the internal ring 11. Thus, in the first operation mode, the external ring 10, the internal ring 11, and the interlock member 3 are brought into an integrally-rotatable state.

At this time, the cam pins 10a, 10a, and 10a of the external ring 10 are respectively engaged with the first linear portions 15a, 15a, and 15a of the cam grooves 15, 15, and 15 formed in the internal ring 11. Thus, the internal ring 11 is positioned at an anterior movement end (first position) and the transmission gear 18 is brought into a state of being not meshed with the reverse gear 9 of the fixing member 2.

The ring keys 11a, 11a, and 11a of the internal ring 11 are respectively engaged with the first movement portions 7a, 7a, and 7a of the key movement grooves 7, 7, and 7 formed in the fixing member 2.

Because the internal ring 11 is positioned at the anterior movement end, the light-shielding fin 19 provided on the internal ring 11 is partially positioned on the inside of the detection unit 22. Because the light-shielding fin 19 is partially positioned on the inside of the detection unit 22, it is detected by the detection unit 22 that the first operation mode in which the internal ring 11 is positioned at the anterior movement end is set.

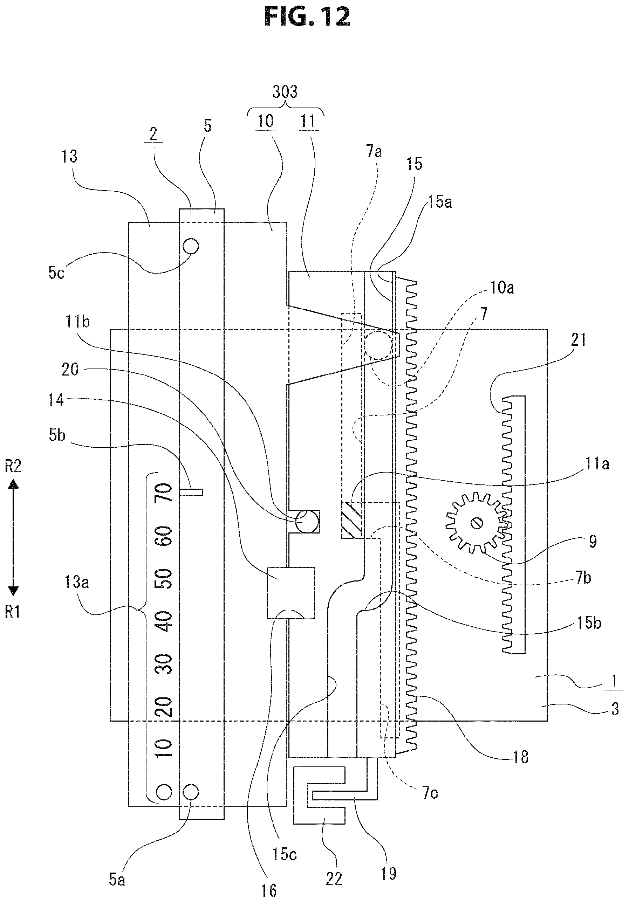

In the above-described first operation mode, when the external ring 10 is rotationally manipulated in a first direction (an R1 direction illustrated in FIGS. 11 and the like), the external ring 10, the internal ring 11, and the interlock member 3 are integrally rotated. At this time, for performing changeover between the first operation mode and the second operation mode, the external ring 10 is rotated up to a first telephoto end index position, for example (refer to FIG. 12). When the interlock member 3 is rotated integrally with the external ring 10 and the internal ring 11, the interlock pin 20 of the interlock member 3 is moved in the insertion hole 6. For example, the first telephoto end index position is a position at which the mark 5a and the mark 5b added to the projecting portion 5 of the fixing member 2 coincide with the calibrations at both ends of the first index 13a.

In a state in which the external ring 10 is rotated up to the first telephoto end index position, the cam pin 10a remains engaged with the first linear portion 15a of the cam groove 15. In addition, the ring key 11a of the internal ring 11 is moved from the first movement portion 7a of the key movement groove 7 to the translation portion 7b. Thus, the ring key 11a is brought into a state of being slidable in the translation portion 7b, and the internal ring 11 is brought into a state of being movable backward with respect to the external ring 10.

At the first telephoto end index position, the interlock pin 20 is brought into a state of being in contact with an opening rim of the insertion hole 6 and brought into a state of being not further rotatable in the R1 direction.

In a state in which the external ring 10 is rotated up to the first telephoto end index position, the mode change switch 14 is manipulated. By the mode change switch 14 being manipulated, the mode change switch 14 is pulled out from the first lock groove 16 and a locked state of the external ring 10 and the internal ring 11 is released. By the mode change switch 14 being manipulated and the locked state of the external ring 10 and the internal ring 11 being released, the changeover transition mode is set from the first operation mode.

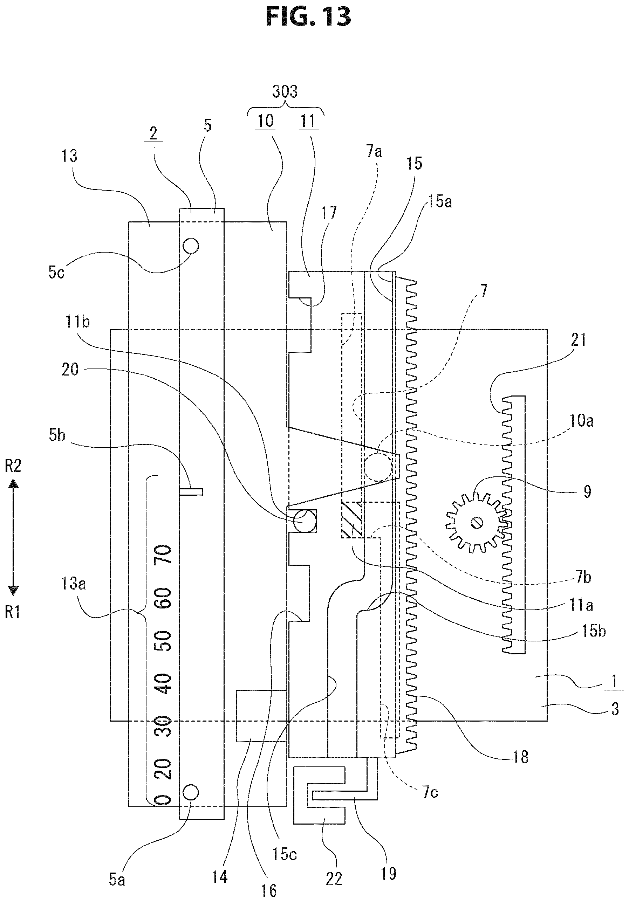

When the external ring 10 is continuously rotationally manipulated in the R1 direction in a state in which locking of the external ring 10 and the internal ring 11 that is performed by the mode change switch 14 is released, the external ring 10 is rotated with respect to the internal ring 11 (refer to FIG. 13). At this time, because the interlock pin 20 is engaged with the pin engagement groove 11b of the internal ring 11, the interlock member 3 is not rotated in the R1 direction and brought into a stopped state together with the internal ring 11. Thus, the cam pin 10a of the external ring 10 is moved in the first linear portion 15a of the cam groove 15 toward the inclined portion 15b.

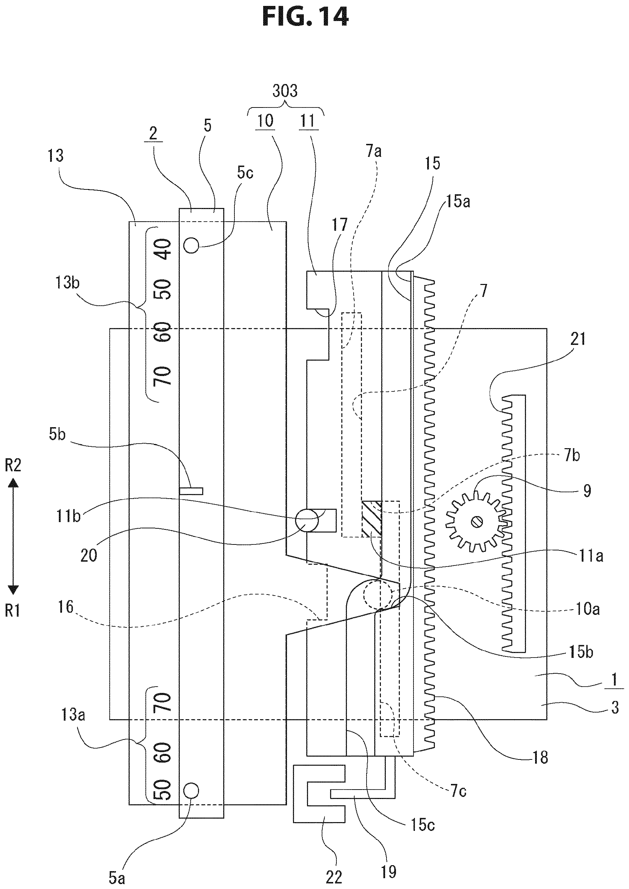

When the external ring 10 is further rotated in the R1 direction, the cam pin 10a reaches the inclined portion 15b from the first linear portion 15a of the cam groove 15 and the internal ring 11 is moved backward with respect to the external ring 10 (refer to FIG. 14). At the same time, the ring key 11a of the internal ring 11 is moved in the translation portion 7b toward the second movement portion 7c.

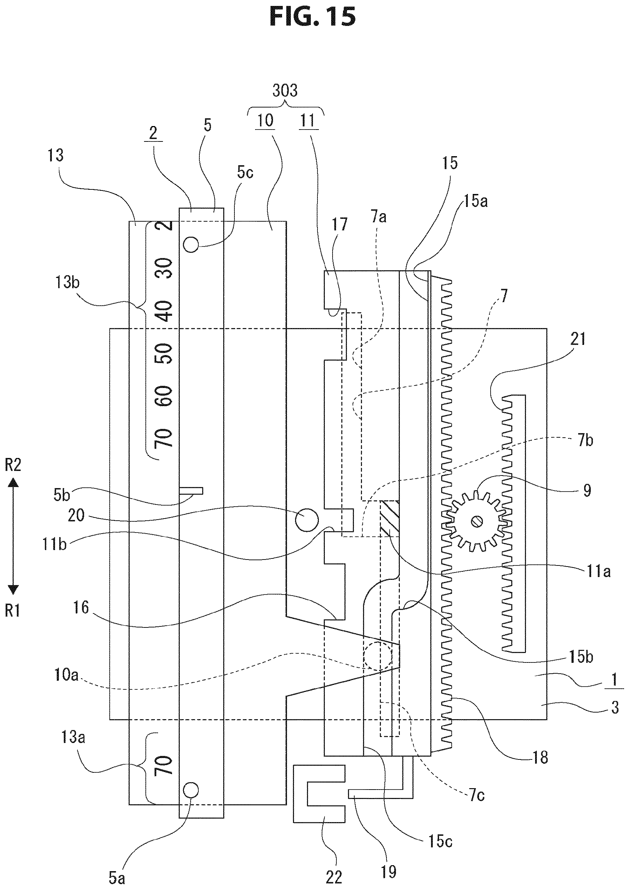

Subsequently, when the external ring 10 is rotated in the R1 direction, the cam pin 10a reaches the second linear portion 15c from the inclined portion 15b of the cam groove 15 and the internal ring 11 is moved up to a posterior movement end (second position) (refer to FIG. 15). At the same time, the ring key 11a of the internal ring 11 is moved from the translation portion 7b to the second movement portion 7c.

When the internal ring 11 is moved up to the posterior movement end, the interlock pin 20 of the interlock member 3 is relatively pulled out toward the front side from the pin engagement groove 11b and the interlock member 3 is brought into a state of being rotatable with respect to the internal ring 11. At this time, in the internal ring 11 moved up to the posterior movement end, the transmission gear 18 is meshed with the reverse gear 9 of the fixing member 2. Thus, the transmission gear 18 and the driving gear 21 of the interlock member 3 enter states of being meshed with the reverse gear 9 from opposite sides, and the internal ring 11 and the interlock member 3 are brought into states of being rotatable in opposite directions.

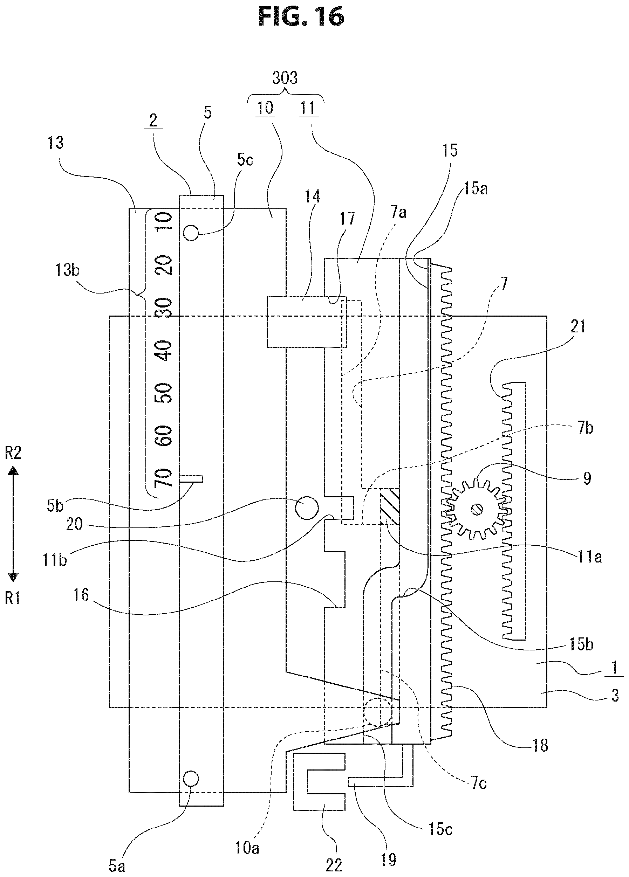

The external ring 10 is further rotated in the R1 direction up to a second telephoto end index position (refer to FIG. 16). For example, the second telephoto end index position is a position at which the mark 5b and the mark 5c added to the projecting portion 5 of the fixing member 2 coincide with the calibrations at both ends of the second index 13b. In a state in which the external ring 10 is rotated up to the second telephoto end index position, the mode change switch 14 coincides with the second lock groove 17 of the internal ring 11 in a radial direction.

In a state in which the external ring 10 is rotated up to the second telephoto end index position, the mode change switch 14 is manipulated. By the mode change switch 14 being manipulated, the mode change switch 14 is inserted into the second lock groove 17. Thus, the external ring 10 and the internal ring 11 are locked again and brought into an integrally-rotatable state again. At this time, as described above, the interlock pin 20 is pulled out from the pin engagement groove 11b and the interlock member 3 is not rotated integrally with the internal ring 11, and the internal ring 11 and the interlock member 3 are brought into states of being rotatable in opposite directions.

By the mode change switch 14 being manipulated and the external ring 10 and the internal ring 11 being locked, the second operation mode is set from the changeover transition mode.

At this time, as described above, because the internal ring 11 is moved up to the posterior movement end, the light-shielding fin 19 that had been partially positioned on the inside of the detection unit 22 is pulled out from the detection unit 22 and the light-shielding fin 19 is no longer positioned on the inside of the detection unit 22. It is thereby detected by the detection unit 22 that the second operation mode in which the internal ring 11 is positioned at the posterior movement end is set.

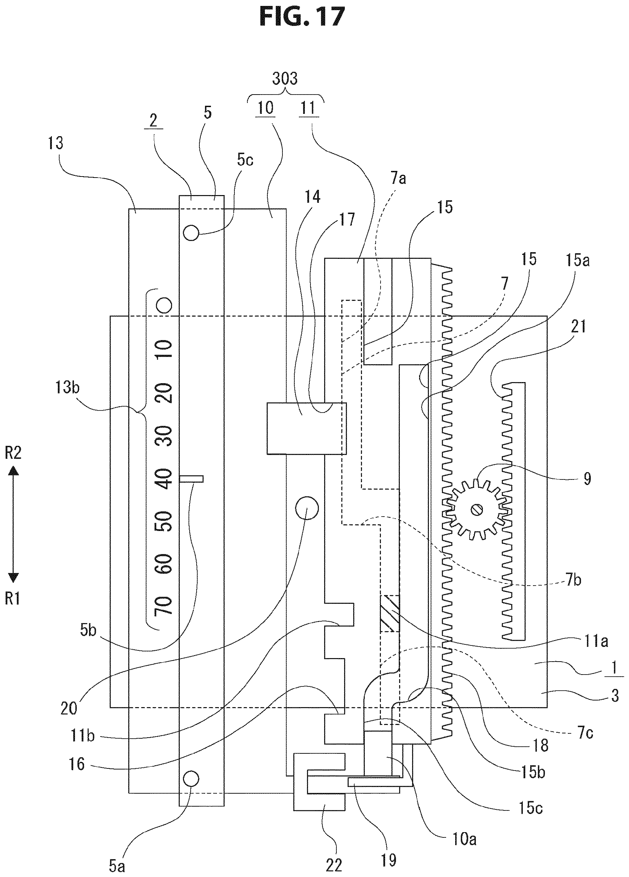

When the external ring 10 is rotationally manipulated in the R1 direction in the second operation mode, the external ring 10 and the internal ring 11 are integrally rotated and the interlock member 3 is rotated in a direction opposite to the internal ring 11 (an R2 direction illustrated in FIGS. 17 and the like) in accordance with the rotation of the internal ring 11 (refer to FIG. 17). At this time, the ring key 11a of the internal ring 11 is moved in the second movement portion 7c of the key movement groove 7.

As described above, when the external ring 10 is rotated in the first operation mode, the external ring 10, the internal ring 11, and the interlock member 3 are integrally rotated in the same direction, and when the external ring 10 is rotated in the second operation mode, the external ring 10 and the internal ring 11 are integrally rotated in the same direction and the interlock member 3 is rotated in a direction opposite to the external ring 10 and the internal ring 11. Thus, between the first operation mode and the second operation mode, the interlock member 3 is rotated in opposite directions with respect to a rotation direction of the external ring 10.

In this manner, in the interchangeable lens 300, between the first operation mode and the second operation mode, rotation directions of the interlock member 3 with respect to a rotation direction of the external ring 10 are made opposite directions.

Thus, in a shooting state of a moving image in which the first operation mode is set, for example, when the second manipulation ring 303 (the external ring 10) is rotationally manipulated in the counterclockwise direction (first rotation direction) when viewed from an image plane side (photographer side), the interlock member 3 is rotated in the counterclockwise direction and the optical element 308 is moved in the first direction directed from the wide angle side toward the telephoto side, and when the second manipulation ring 303 is rotationally manipulated in the clockwise direction (second rotation direction), the interlock member 3 is rotated in the clockwise direction and the optical element 308 is moved in the second direction directed from the telephoto side toward the wide angle side.

The rotation of the second manipulation ring 303 in the first operation mode is performed in a range in which the mark 5b added to the projecting portion 5 of the fixing member 2 is moved in an existence region of the first index 13a, and the rotation range of the second manipulation ring 303 is regarded as a first rotational manipulation range.

On the other hand, in a shooting state of a still image in which the second operation mode is set, when the second manipulation ring 303 (the external ring 10) is rotationally manipulated in the clockwise direction when viewed from an image plane side (photographer side), the interlock member 3 is rotated in the counterclockwise direction and the optical element 308 is moved from the wide angle side toward the telephoto side, and when the second manipulation ring 303 is rotationally manipulated in the counterclockwise direction, the interlock member 3 is rotated in the clockwise direction and the optical element 308 is moved from the telephoto side toward the wide angle side.

The rotation of the second manipulation ring 303 in the second operation mode is performed in a range in which the mark 5b added to the projecting portion 5 of the fixing member 2 is moved in an existence region of the second index 13b, and the rotation range of the second manipulation ring 303 is regarded as a second rotational manipulation range. Thus, the first rotational manipulation range being a rotation range of the second manipulation ring 303 in the first operation mode and the second rotational manipulation range being a rotation range of the second manipulation ring 303 in the second operation mode are set to different ranges that do not overlap each other.

The changeover from the second operation mode to the first operation mode is performed by an operation opposite to the above-described changeover operation from the first operation mode to the second operation mode. The details of the changeover operation from the second operation mode to the first operation mode will be omitted. The changeover to the first operation mode can be performed by rotating the external ring 10 up to the second telephoto end index position in the second operation mode, manipulating the mode change switch 14, releasing locking of the external ring 10 and the internal ring 11, setting the changeover transition mode, and subsequently rotating the external ring 10 in the R2 direction up to the first telephoto end index position, manipulating the mode change switch 14, and locking the external ring 10 and the internal ring 11 again.

Note that the above description has been given of an example in which, in the first operation mode, the optical element 308 is moved in the first direction by a rotational manipulation in the counterclockwise direction of the second manipulation ring 303 and the optical element 308 is moved in the second direction by a rotational manipulation in the clockwise direction of the second manipulation ring 303, and in the second operation mode, the optical element 308 is moved in the second direction by a rotational manipulation in the counterclockwise direction of the second manipulation ring 303 and the optical element 308 is moved in the first direction by a rotational manipulation in the clockwise direction of the second manipulation ring 303.

Nevertheless, in the interchangeable lens 300, the optical element 308 may be configured to be moved in the following manner. In the first operation mode, the optical element 308 is moved in the second direction by a rotational manipulation in the counterclockwise direction of the second manipulation ring 303 and the optical element 308 is moved in the first direction by a rotational manipulation in the clockwise direction of the second manipulation ring 303, and in the second operation mode, the optical element 308 is moved in the first direction by a rotational manipulation in the counterclockwise direction of the second manipulation ring 303 and the optical element 308 is moved in the second direction by a rotational manipulation in the clockwise direction of the second manipulation ring 303.

In addition, the above description has been given of an example in which, by the second manipulation ring 303 functioning as a zoom ring being rotationally operated, a moving direction of the optical element 308 with respect to a rotation direction of the second manipulation ring 303 is changed over. Nevertheless, a manipulation ring is not limited to the second manipulation ring 303, and for example, also in another manipulation ring provided in the interchangeable lens 300, such as the first manipulation ring 302 functioning as a focus ring and the third manipulation ring 304 functioning as an iris ring, an optical element can also be configured to be changed over in a moving direction with respect to a rotation direction of the manipulation ring, by a mechanism similar to the above.

As described above, in the interchangeable lens 300, the second manipulation ring 303 includes the external ring 10 and the internal ring 11 positioned on the inside of the external ring 10, the external ring 10 and the internal ring 11 are made integrally rotatable in the operation mode, and the changeover mechanism is operated by the external ring 10 being rotated with respect to the internal ring 11 in the changeover transition mode.

Thus, because a rotation state of the external ring 10 with respect to the internal ring 11 is changed and an operation state of the changeover mechanism is changed by manipulating the mode change switch 14, mode changing between the operation mode and the changeover transition mode can be performed using a simple mechanism.

In addition, in the changeover transition mode, the internal ring 11 is made movable between the first position and the second position in the front-back direction, which is a direction different from a rotation direction, with respect to the external ring 10, and an operation direction of the optical element 308 is changed over in accordance with a movement position of the internal ring 11.

Thus, because an operation direction of the optical element 308 is changed over by the internal ring 11 being moved to the first position or the second position, an operation direction of the optical element 308 can be changed over using a simple mechanism.

Furthermore, the cam groove 15 is formed in one of the external ring 10 and the internal ring 11, and the cam pin 10a to be slidably engaged with the cam groove 15 is provided on the other one thereof, and the internal ring 11 is moved between the first position and the second position by a change in position of the cam pin 10a with respect to the cam groove 15 that is caused by the rotation of the external ring 10 with respect to the internal ring 11.

Thus, because the internal ring 11 is moved to the first position or the second position by the external ring 10 being rotated with respect to the internal ring 11 and a position of the cam pin 10a with respect to the cam groove 15 being changed, the internal ring 11 can be moved using a simple mechanism.

Furthermore, in addition, the transmission gear 18 that can be meshed with the reverse gear 9 is formed on the second manipulation ring 303, the second manipulation ring 303 and the interlock member 3 are rotated in opposite directions in a state in which the transmission gear 18 is meshed with the reverse gear 9, and the second manipulation ring 303 and the interlock member 3 are rotated in the same direction in a state in which the transmission gear 18 is not meshed with the reverse gear 9.

Thus, because rotation directions of the interlock member 3 with respect to a rotation direction of the second manipulation ring 303 are made opposite directions between a state in which the transmission gear 18 is meshed with the reverse gear 9 and a state in which the transmission gear 18 is not meshed with the reverse gear 9, an operation direction of the optical element 308 can be changed over using a simple mechanism.

In addition, the interlock pin 20 that can be coupled with the second manipulation ring 303 is provided on the interlock member 3, the interlock member 3 is rotated integrally with the second manipulation ring 303 in a state in which the interlock pin 20 is coupled with the second manipulation ring 303, and the transmission gear 18 is meshed with the reverse gear 9 in a state in which the coupling of the interlock pin 20 with the second manipulation ring 303 is released.

Thus, because rotation directions of the interlock member 3 with respect to a rotation direction of the second manipulation ring 303 are made opposite directions between a state in which the interlock pin 20 is coupled with the second manipulation ring 303 and a state in which the coupling of the interlock pin 20 with the second manipulation ring 303 is released and the transmission gear 18 is meshed with the reverse gear 9, an operation direction of the optical element 308 can be changed over using a simple mechanism.

Furthermore, the driving gear 21 meshed with the reverse gear 9 is formed on the interlock member 3, and rotational force of the second manipulation ring 303 is transmitted to the interlock member 3 via the transmission gear 18 and the reverse gear 9 in a state in which the transmission gear 18 is meshed with the reverse gear 9.

Thus, because rotational force of the second manipulation ring 303 is transmitted to the interlock member 3 via the transmission gear 18 and the reverse gear 9 in a state in which the transmission gear 18 is meshed with the reverse gear 9 and the driving gear 21 is meshed with the reverse gear 9, the interlock member 3 can be surely rotated by the rotation of the second manipulation ring 303 using a simple mechanism.

Furthermore, in addition, the transmission gear 18 is formed into a shape extending in a rotation direction, and the transmission gear 18 is positioned on the outside of the driving gear 21 in a state in which the transmission gear 18 is meshed with the reverse gear 9.

Thus, because the transmission gear 18 formed into a ring shape is positioned on the outside of the driving gear 21 in a state in which the transmission gear 18 is meshed with the reverse gear 9 and the driving gear 21 is meshed with the reverse gear 9, the interlock member 3 can be surely rotated by the rotation of the second manipulation ring 303 while ensuring downsizing.

### <Control Example in Interchangeable Lens>

In the interchangeable lens 300, for example, the following control is performed in an automatic state. Note that, as described above, the automatic state can be set by manipulating the state changeover knob being one of the manipulation knobs 307, and changeover between a manual state and the automatic state is performed using the state changeover knob.

The control in the automatic state is performed on the basis of a detection result of the detection unit 22 that detects the existence or non-existence of the light-shielding fin 19 of the internal ring 11. As described above, the detection unit 22 detects that the first operation mode is set, when the light-shielding fin 19 is partially positioned on the inside of the detection unit 22, and detects that the second operation mode is set, when the light-shielding fin 19 is not positioned on the inside of the detection unit 22.

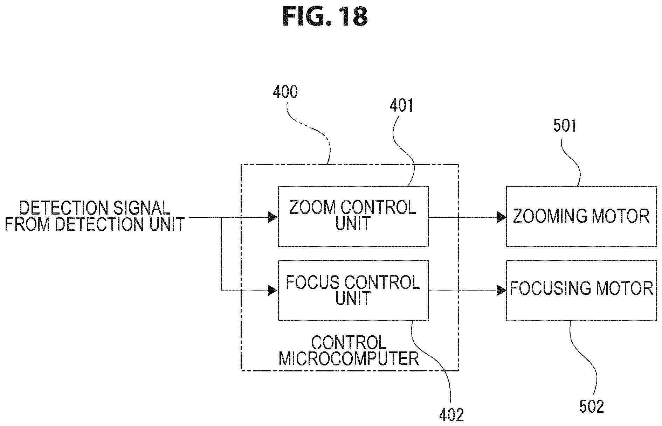

The interchangeable lens 300 is provided with a control microcomputer 400 that executes overall control, and the control microcomputer 400 includes a zoom control unit 401 and a focus control unit 402 (refer to FIG. 18).

In the automatic state, the optical element 308 serving as a zoom lens group is moved in an optical axis direction by a zooming motor 501, and a focus lens group is moved in the optical axis direction by a focusing motor 502. The zooming motor 501 is controlled by the zoom control unit 401 and the focusing motor 502 is controlled by the focus control unit 402.

When a detection signal is input to the control microcomputer 400 on the basis of a detection result of the detection unit 22, the zoom control unit 401 and the focus control unit 402 are operated on the basis of the detection signal, the zooming motor 501 is controlled by the zoom control unit 401, and the focusing motor 502 is controlled by the focus control unit 402.

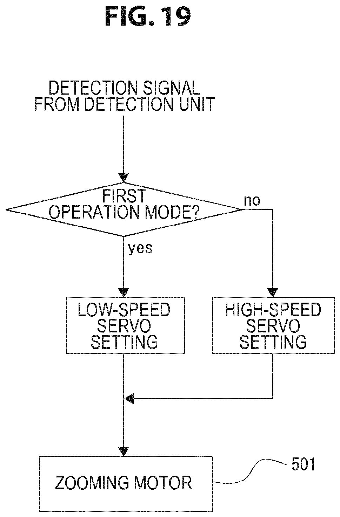

In a zooming operation, the following control is performed (refer to FIG. 19).

When a detection signal is input to the control microcomputer 400 on the basis of a detection result of the detection unit 22, the control microcomputer 400 determines whether the first operation mode is set or not.

When the control microcomputer 400 determines that the first operation mode being a shooting state of a moving image is set, control of a low-speed servo setting is performed by the zoom control unit 401 and a rotational speed of the zooming motor 501 is set to a speed lower than a reference speed.

On the other hand, when the control microcomputer 400 does not determine that the first operation mode is set, control of a high-speed servo setting is performed by the zoom control unit 401 and a rotational speed of the zooming motor 501 is set to a speed higher than the reference speed. Note that a mode set when the control microcomputer 400 does not determine that the first operation mode is set is a state in which the second operation mode being a shooting state of a still image is set.

When a zooming operation is to be performed in a shooting state of a moving image, it is generally desirable to perform a field angle change at low speed for ensuring a high quality shot image, and when a zooming operation is to be performed in a shooting state of a still image, it is generally desirable to perform a field angle change at high speed for ensuring a prompt shooting chance.

Thus, in a zooming operation, by the above-described control on the zooming motor 501, control of causing the first operation mode to decline in the operation speed of the optical element 308, with respect to that in the second operation mode is performed, and it becomes possible to ensure a high quality shot image in a shooting state of a moving image and it becomes possible to ensure a prompt shooting chance in a shooting state of a still image, so that enhancement in functionality in zooming can be achieved.

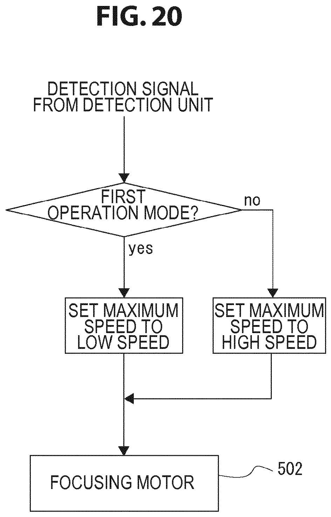

In a focusing operation, the following control is performed (refer to FIG. 20).

When a detection signal is input to the control microcomputer 400 on the basis of a detection result of the detection unit 22, the control microcomputer 400 determines whether the first operation mode is set or not.

When the control microcomputer 400 determines that the first operation mode being a shooting state of a moving image is set, control of a low-speed setting is performed by the focus control unit 402, and a rotational speed of the focusing motor 502 is set to a low speed, for example, a maximum speed is set to a low speed.

On the other hand, when the control microcomputer 400 does not determine that the first operation mode is set, control of a high-speed servo setting is performed by the focus control unit 402, and a rotational speed of the focusing motor 502 is set to a high speed, for example, a maximum speed is set to a high speed. Note that a mode set when the control microcomputer 400 does not determine that the first operation mode is set is a state in which the second operation mode being a shooting state of a still image is set.

When a focusing operation is to be performed in a shooting state of a moving image, it is generally desirable to perform focusing at low speed for reducing out of focus and ensuring a high quality shot image, and when a focusing operation is to be performed in a shooting state of a still image, it is generally desirable to perform focusing at high speed for ensuring a prompt shooting chance.

Thus, in a focusing operation, by the above-described control on the focusing motor 502, control of causing the first operation mode to decline in the operation speed of the focus lens group, with respect to that in the second operation mode is performed, and it becomes possible to ensure a high quality shot image in a shooting state of a moving image and it becomes possible to ensure a prompt shooting chance in a shooting state of a still image, so that enhancement in functionality in focusing can be achieved.

As described above, in the interchangeable lens 300, the detection unit 22 that detects the first operation mode and the second operation mode is provided, and on the basis of a detection result of the detection unit 22, respective operation speeds of the optical element 308 serving as a zoom lens group and a focus lens group are controlled in the automatic state.

Thus, in the first operation mode and the second operation mode, it becomes possible to perform optimum control in the automatic state regarding the operation speeds of the optical element 308 and the focus lens group, so that enhancement in functionality can be achieved.

Note that the above description has been given of a control example regarding a zooming operation and a focusing operation, but the above-described control can also be applied to an operation of an iris blade. In this case, for example, control of causing the first operation mode to decline in the operation speed of the iris blade, with respect to the in the second operation mode is performed.

Thus, it becomes possible to ensure a high quality shot image in a shooting state of a moving image and it becomes possible to ensure a prompt shooting chance in a shooting state of a still image, so that enhancement in functionality in an operation regarding an amount of light taken into the interchangeable lens 300 can be achieved.

### <Modified Example of Optical Element Driving Device>

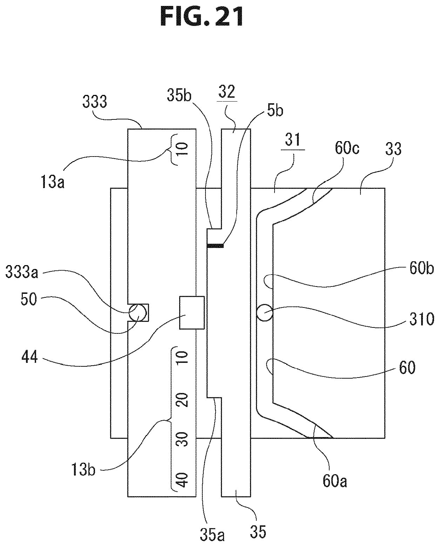

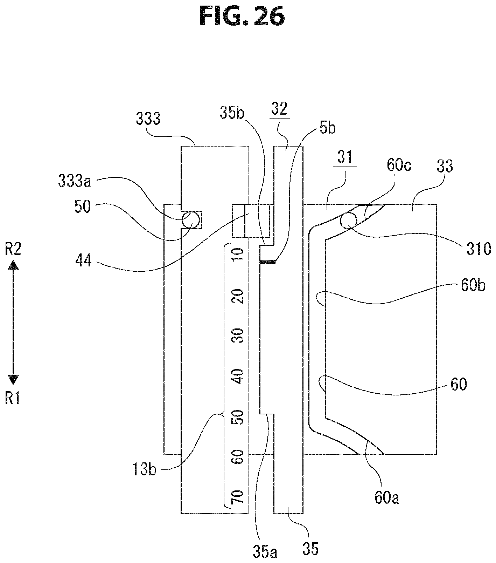

Next, a modified example of the optical element driving device 1 including a changeover mechanism for performing changeover between the first operation mode and the second operation mode will be described (refer to FIGS. 21 to 26). Note that FIGS. 21 to 26 are diagrams conceptually illustrating a positional relationship between portions, and the like for facilitating the understanding of an operation in the modified example.

The optical element driving device 31 according to the modified example includes a fixing member 32 and an interlock member 33. As the fixing member 32, for example, a fixing ring fixed on the casing 305 is used, and as the interlock member 33, for example, a cam ring rotatable in a circumferential direction (axial rotation direction) is used (refer to FIG. 21).

In the interchangeable lens 300, a changeover mechanism that changes over an operation direction of the optical element 308 with respect to a rotation direction of the second manipulation ring 333 and sets a first operation mode and a second operation mode, is provided at least on the interlock member 33. Note that, in addition to the interlock member 33, the changeover mechanism may also be provided on the fixing member 32 and another structural member such as each manipulation ring.

On a projecting portion 35 of the fixing member 32, a first lock portion 35a and a second lock portion 35b are formed at a distance in the circumferential direction. The projecting portion 35 has at least a mark 5b.

The second manipulation ring 333 is formed into a substantially circular ring shape, and does not have a dual structure of the external ring 10 and the internal ring 11 as in the second manipulation ring 303. In the second manipulation ring 333, a pin coupling groove 333a is formed.

On the second manipulation ring 333, a mode change switch 44 is arranged. A pressing manipulation of the mode change switch 44 enables the settings of an operation mode in which the optical element 308 is moved by the rotation of the second manipulation ring 333 and zooming is performed, and a changeover transition mode in which a moving direction of the optical element 308 is changed over by the rotation of the second manipulation ring 333.

By being manipulated, the mode change switch 44 is moved between a lockable position at which the mode change switch 44 can be engaged with the first lock portion 35a or the second lock portion 35b of the fixing member 32, and an unlocked position at which the mode change switch 44 is engaged with neither of the first lock portion 35a and the second lock portion 35b.

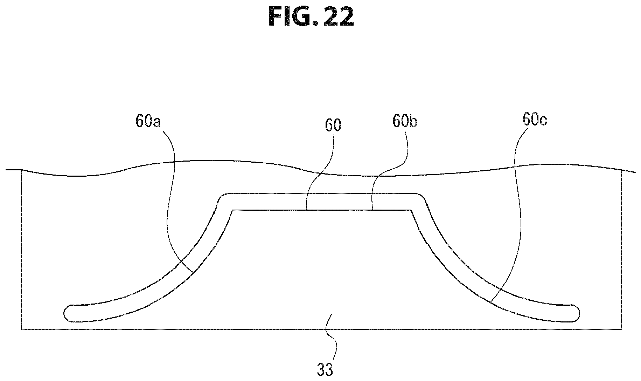

The interlock member 33 includes cam holes 60 and 60 (only one cam hole 60 is illustrated in FIGS. 21 and the like.). The cam hole 60 includes a first operation portion 60a, a transition portion 60b, and a second operation portion 60c that are continuously formed in the circumferential direction (refer to FIG. 22). The first operation portion 60a is formed into a curve inclined so as to be displaced forward as getting close to the transition portion 60b, the transition portion 60b is formed into a straight line extending in the circumferential direction, and the second operation portion 60c is formed into a curve inclined so as to be displaced backward as getting away from the transition portion 60b.

The first operation portion 60a and the second operation portion 60c are formed into symmetric shapes at a distance in the circumferential direction (rotation direction).

The interlock member 33 is provided with an interlock pin 50 protruding outward. The interlock member 33 is engaged by the interlock pin 50 being inserted into the pin coupling groove 333a of the second manipulation ring 333. Thus, the interlock member 33 is rotated always integrally with the second manipulation ring 333.

The interchangeable lens 300 is provided with a direct advance ring (not illustrated) and the direct advance ring is positioned on the inside of the interlock member 33, for example. A pair of guide holes extending in the front-back direction is formed in the direct advance ring. Note that the optical element 308 can also be configured to be moved in the following manner. For example, the direct advance ring is not provided, a guide shaft is provided on one of the fixing member 32 and the interlock member 33 and a shaft sleeve is formed on the other one thereof, and the guide shaft and the shaft sleeve are slidably engaged. The interlock member 33 is thereby guided to the fixing member 32 and the optical element 308 is moved in the front-back direction (optical axis direction).

On the interlock member 33 and the direct advance ring, the holder 309 holding the optical element 308 is supported, and the cam followers 310 and 310 of the holder 309 are slidably engaged with the guide holes of the direct advance ring and the cam holes 60 and 60 of the interlock member 33, respectively. Thus, when the interlock member 33 is rotated in the axial rotation direction integrally with the second manipulation ring 333, engagement positions of the cam followers 310 and 310 with respect to the cam holes 60 and 60 are changed and the cam followers 310 and 310 are guided into the guide holes, and the optical element 308 and the holder 309 are moved in the front-back direction (optical axis direction) in accordance with the rotation direction of the interlock member 33.

Note that the second manipulation ring 333 is provided with a light-shielding fin (not illustrated) similar to the light-shielding fin 19 provided on the internal ring 11.

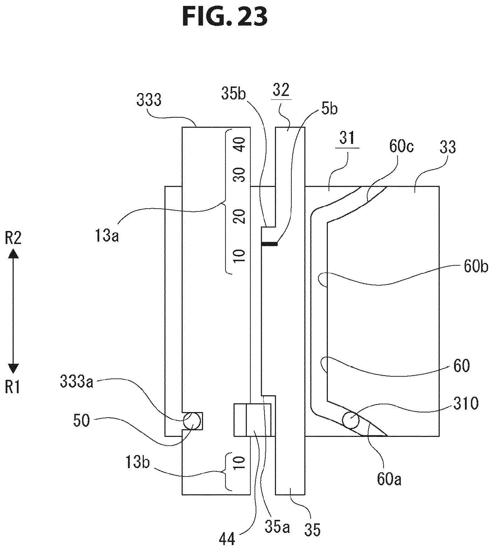

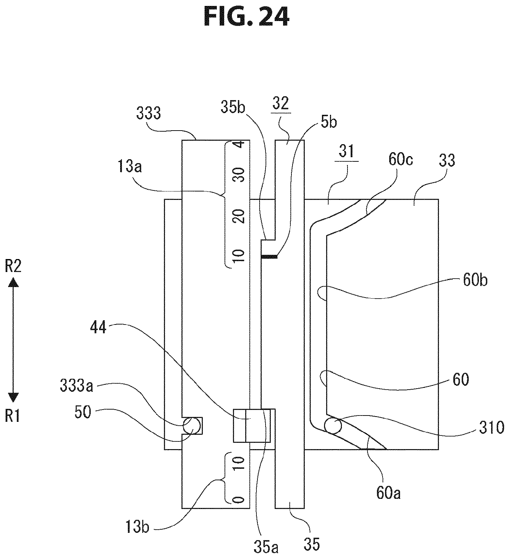

In the first operation mode, the mode change switch 44 is at the lockable position and the cam followers 310 and 310 of the holder 309 holding the optical element 308 are slidably engaged with the first operation portions 60a and 60a of the cam holes 60 and 60, respectively (refer to FIGS. 23 and 24).

In the first operation mode, when the interlock member 33 is rotated in accordance with the rotation of the second manipulation ring 333, positions of the cam followers 310 with respect to the first operation portions 60a are changed, and the optical element 308 is moved in the optical axis direction.

By the second manipulation ring 333 being rotated in the R2 direction and the mode change switch 44 contacting the first lock portion 35a of the fixing member 32, rotation in the R2 direction of the second manipulation ring 333 and the interlock member 33 is regulated (refer to FIG. 24). At this time, the optical element 308 is positioned at a wide angle end and the second manipulation ring 333 is rotated up to a first wide angle end index position at which the mark 5b coincides with a calibration added to one end of the second index 13b.

Thus, in a shooting state of a moving image in which the first operation mode is set, for example, when the second manipulation ring 333 is rotationally manipulated in the counterclockwise direction (the R1 direction being the first rotation direction) when viewed from an image plane side (photographer side), the interlock member 33 is rotated in the counterclockwise direction and the optical element 308 is moved in the first direction directed from the wide angle side toward the telephoto side, and when the second manipulation ring 333 is rotationally manipulated in the clockwise direction (the R2 direction being the second rotation direction), the interlock member 33 is rotated in the clockwise direction and the optical element 308 is moved in the second direction directed from the telephoto side toward the wide angle side.

In the first operation mode, the mode change switch 44 is manipulated in a state in which the second manipulation ring 333 is rotated up to the first wide angle end index position. By the mode change switch 44 being manipulated, the mode change switch 44 is moved to the unlocked position, a state in which a rotational manipulation in the R2 direction of the second manipulation ring 333 can be performed is caused, and the changeover transition mode is set from the first operation mode.

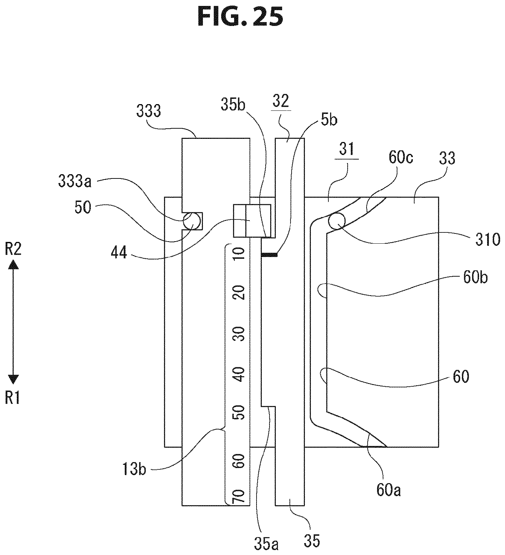

When the second manipulation ring 333 is rotationally manipulated in the R2 direction in a state in which locking of the second manipulation ring 333 that is performed by the mode change switch 44 is released, the cam follower 310 is caused to slide in the transition portion 60b. The mode change switch 44 is manipulated in a state in which the second manipulation ring 333 is rotated up to a second wide angle end index position coinciding with a calibration added to one end of the first index 13a. By the mode change switch 44 being manipulated, the mode change switch 44 is moved to the lockable position again, and by the mode change switch 44 contacting the second lock portion 35b of the fixing member 32, rotation in the R1 direction of the second manipulation ring 333 and the interlock member 33 is regulated (refer to FIG. 25). At this time, the optical element 308 is positioned at the wide angle end. By the mode change switch 44 being manipulated, the second operation mode is set from the changeover transition mode. At this time, the cam followers 310 are slidably engaged with the second operation portions 60c of the cam holes 60.

In the second operation mode, when the interlock member 33 is rotated in accordance with the rotation of the second manipulation ring 333, positions of the cam followers 310 with respect to the second operation portions 60c are changed, and the optical element 308 is moved in the optical axis direction.

In a shooting state of a still image in which the second operation mode is set, when the second manipulation ring 333 is rotationally manipulated in the counterclockwise direction (the R1 direction being the first rotation direction) when viewed from an image plane side (photographer side), the interlock member 33 is rotated in the counterclockwise direction and the optical element 308 is moved in the second direction directed from the telephoto side toward the wide angle side, and when the second manipulation ring 333 is rotationally manipulated in the clockwise direction (the R2 direction being the second rotation direction), the interlock member 33 is rotated in the clockwise direction and the optical element 308 is moved in the first direction directed from the wide angle side toward the telephoto side.

The changeover from the second operation mode to the first operation mode is performed by an operation opposite to the above-described changeover operation from the first operation mode to the second operation mode. The details of the changeover operation from the second operation mode to the first operation mode will be omitted. The changeover to the first operation mode can be performed by rotating the second manipulation ring 333 in the R1 direction in the second operation mode, manipulating the mode change switch 44, releasing locking of the second manipulation ring 333, setting the changeover transition mode, and subsequently rotating the second manipulation ring 333 in the R1 direction, manipulating the mode change switch 44, and locking the second manipulation ring 333 again.

Note that the above description has been given of an example in which, in the first operation mode, the optical element 308 is moved in the first direction by a rotational manipulation in the counterclockwise direction of the second manipulation ring 333 and the optical element 308 is moved in the second direction by a rotational manipulation in the clockwise direction of the second manipulation ring 333, and in the second operation mode, the optical element 308 is moved in the second direction by a rotational manipulation in the counterclockwise direction of the second manipulation ring 333 and the optical element 308 is moved in the first direction by a rotational manipulation in the clockwise direction of the second manipulation ring 333.

Nevertheless, the optical element 308 may be configured to be moved in the following manner. In the first operation mode, the optical element 308 is moved in the second direction by a rotational manipulation in the counterclockwise direction of the second manipulation ring 333 and the optical element 308 is moved in the first direction by a rotational manipulation in the clockwise direction of the second manipulation ring 333, and in the second operation mode, the optical element 308 is moved in the first direction by a rotational manipulation in the counterclockwise direction of the second manipulation ring 333 and the optical element 308 is moved in the second direction by a rotational manipulation in the clockwise direction of the second manipulation ring 333.

Note that the changeover mechanism according to the second modified example can also be applied to another manipulation ring provided in the interchangeable lens 300, such as, for example, the first manipulation ring 302 functioning as a focus ring and the third manipulation ring 304 functioning as an iris ring.

As described above, in the optical element driving device 31 according to the modified example, the first operation portion 60a that operates the optical element 308 in the first operation mode and the second operation portion 60c that operates the optical element 308 in the second operation mode are formed on the interlock member 33.

Thus, in the first operation mode and the second operation mode, the optical element 308 is moved in each direction by the first operation portion 60a and the second operation portion 60c, respectively, in accordance with a rotation direction of the interlock member 33. An operation direction of the optical element 308 can be therefore changed over using a simple structure.

In addition, a cam ring to be rotated in the same direction as the second manipulation ring 333 is provided as the interlock member 33, and the first operation portion 60a and the second operation portion 60c are formed into symmetric shapes at a distance in the rotation direction of the interlock member 33.

Thus, in the first operation mode and the second operation mode, the optical element 308 is moved in each direction by the first operation portion 60a and the second operation portion 60c, respectively, that are formed into symmetric shapes at a distance in the rotation direction of the interlock member 33. The optical element 308 can be therefore operated at the same speed when the second manipulation ring 333 is rotated at the same speed in the first operation mode and the second operation mode, and a good operation state of the optical element 308 can be ensured.

### <Conclusion>

As described above, an interchangeable lens 300 includes: interlock members 3 and 33 configured to be operated by rotational force of rotationally-manipulated second manipulation rings 303 and 333, and operate an optical element 308 by transmitting rotational force of the second manipulation rings 303 and 333 to the optical element 308. A changeover mechanism configured to change over an operation direction of the optical element 308 with respect to rotation directions of the second manipulation rings 303 and 333 is provided at least on the interlock members 3 and 33.

Thus, because an operation direction of the optical element 308 with respect to rotation directions of the second manipulation rings 303 and 333 is changed over by the changeover mechanism and the optical element 308 is operated by the rotational force of the second manipulation rings 303 and 333 that is transmitted by the interlock members 3 and 33, the optical element 308 is operated so as to follow a manipulation performed on the second manipulation rings 303 and 333, an operation delay of the optical element 308 rarely occurs, and high operability regarding the second manipulation rings 303 and 333 can be ensured without causing a decline in functionality.

In addition, the settings of the operation mode in which the optical element 308 is operated by rotating the second manipulation ring 303 or 333, and the changeover transition mode in which an operation direction of the optical element 308 is changed over by rotating the second manipulation ring 303 or 333 are enabled, and the mode change switch 14 or 44 that performs changing between the operation mode and the changeover transition mode is provided.

Thus, mode changing between the operation mode and the changeover transition mode is performed by manipulating the mode change switch 14 or 44, a set mode can be surely recognized, and an erroneous manipulation can be prevented.

Furthermore, the optical element 308 is made operable in the first direction and the second direction which are directions opposite to each other, by the second manipulation ring 303 or 333 being rotated in one direction in the first rotational manipulation range, the optical element 308 is operated in the first direction, by the second manipulation ring 303 or 333 being rotated in the other direction in the first rotational manipulation range, the optical element 308 is operated in the second direction, by the second manipulation ring 303 or 333 being rotated in one direction in the second rotational manipulation range, the optical element 308 is operated in the second direction, and by the second manipulation ring 303 or 333 being rotated in the other direction in the second direction, the optical element 308 is operated in the first direction.

Thus, because the optical element 308 is operated in opposite directions by the second manipulation ring 303 or 333 being rotated in different rotational manipulation ranges, an operation direction of the optical element 308 with respect to the rotation of the second manipulation ring 303 or 333 becomes clear and enhancement in usability can be achieved.

Furthermore, in addition, on the second manipulation ring 303 or 333, calibrations of the first index 13a and the second index 13b respectively indicating the first rotational manipulation range and the second rotational manipulation range are added at positions distant in the rotation direction.

Thus, because the calibrations indicating the respective rotational manipulation ranges are present at positions distant in the rotation direction, the rotational manipulation ranges become clear and which rotational manipulation range is indicated by each calibration becomes clear, and good operability of the second manipulation ring 303 or 333 can be ensured.

In addition, in the first operation mode, the optical element 308 is operated in the first direction when the second manipulation ring 303 or 333 is rotated in one direction and the optical element 308 is operated in the second direction when the second manipulation ring 303 or 333 is rotated in the other direction, and in the second operation mode, the optical element 308 is operated in the second direction when the second manipulation ring 303 or 333 is rotated in one direction and the optical element 308 is operated in the first direction when the second manipulation ring 303 or 333 is rotated in the other direction.

Thus, because the optical element 308 is operated in opposite directions with respect to the same rotation direction of the second manipulation ring 303 or 333, between the first operation mode and the second operation mode, it becomes possible to perform a manipulation corresponding to the intention of the user, and enhancement in usability regarding a manipulation of the second manipulation ring 303 or 333 can be achieved.

Additionally, a shooting state of a moving image is set as the first operation mode and a shooting state of a still image is set as the second operation mode.

Thus, because the optical element 308 is moved in opposite directions between a still image shooting time and a moving image shooting time, and zooming or focusing is performed, a function corresponding to the intention of the user that has rotationally manipulated the second manipulation ring 303 or 333 regarding the zooming or focusing can be executed.

### <Embodiment of Imaging Device>

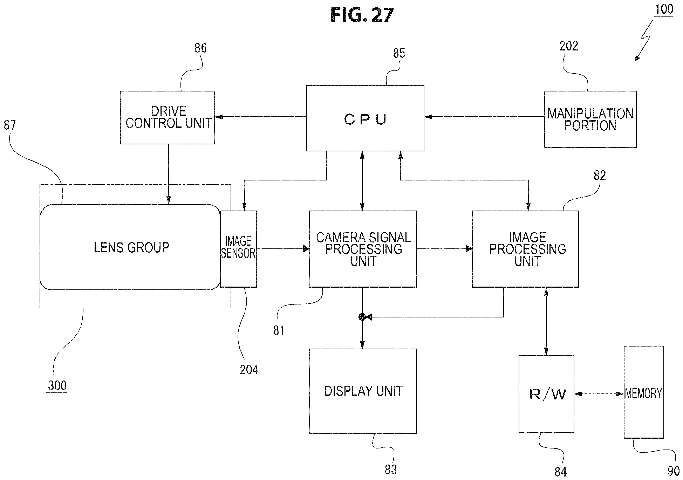

FIG. 27 illustrates a block diagram of an embodiment of the present technology imaging device.

The imaging device 100 includes the interchangeable lens 300 having an imaging function, a camera signal processing unit 81 that performs signal processing such as analog-digital conversion of a shot image signal, and an image processing unit 82 that performs recording reproduction processing of an image signal. In addition, the imaging device 100 includes a display unit (display) 83 that displays a shot image and the like, a reader/writer (R/W) 84 that performs writing and readout of an image signal with respect to a memory 90, a central processing unit (CPU) 85 that controls the entire imaging device 100, a manipulation portion 202 such as various kinds of switches on which a required manipulation is performed by the user, and a drive control unit 86 that controls driving of a lens group 87 including the optical element 308 arranged in the interchangeable lens 300, and the like.

The interchangeable lens 300 includes an optical system including the lens group 87, the image sensor 204 such as a charge coupled device (CCD) and a complementary metal-oxide semiconductor (CMOS), and the like.

The camera signal processing unit 81 performs various kinds of signal processing on an output signal from the image sensor 204. The various kinds of signal processing include conversion into a digital signal, noise removal, image quality correction, and conversion into a brightness/color-difference signal.

The image processing unit 82 performs compression encoding/decompression decoding processing of an image signal that is based on a predetermined image data format, conversion processing of a data specification such as resolution, and the like.

The display unit 83 has a function of displaying various kinds of data such as a state of a manipulation of the manipulation portion 202 that is performed by the user, and a shot image. Note that, in the imaging device 100, the display unit 83 needs not be provided, and shot image data may be transmitted to another display device and an image may be displayed thereon.

The R/W 84 writes image data encoded by the image processing unit 82, into the memory 90, and reads out image data recorded in the memory 90.

The CPU 85 may include the control microcomputer 400, functions as a control processing unit that controls each circuit block provided in the imaging device 100, and controls each circuit block on the basis of an instruction input signal from the manipulation portion 202, and the like.

The manipulation portion 202 outputs an instruction input signal corresponding to a manipulation performed by the user, to the CPU 85.

The drive control unit 86 may include the zoom control unit 401 and the focus control unit 402, and on the basis of a control signal from the CPU 85, controls a drive source for moving the lens group 87, such as the zooming motor 501 and the focusing motor 502, for example.

The memory 90 is a semiconductor memory detachably attached to a slot connected to the R/W 84, for example.

Hereinafter, an operation in the imaging device 100 will be described.

In a wait state of shooting, under the control performed by the CPU 85, a shot image signal is output to the display unit 83 via the camera signal processing unit 81, and is displayed as a camera live view image. In addition, when an instruction input signal from the manipulation portion 202 is input, the CPU 85 outputs a control signal to the drive control unit 86 and the lens group 87 is moved on the basis of the control of the drive control unit 86.

When a shooting operation is performed in accordance with the instruction input signal from the manipulation portion 202, a shot image signal is output from the camera signal processing unit 81 to the image processing unit 82, subject to compression encoding processing, and converted into digital data in a predetermined data format. The converted data is output to the R/W 84 and written into the memory 90.

In a case where image data recorded in the memory 90 is to be reproduced, in accordance with a manipulation performed on the manipulation portion 202, predetermined image data is read out from the memory 90 by the R/W 84, decompression decoding processing is performed by the image processing unit 82, and then, a reproduction image signal is output to the display unit 83 and a reproduction image is displayed.

### <Others>

The above description has been given of an example in which the lens group 87 including the optical element 308 is used as an optical element, but the optical element is not limited to the lens group 87, and as the optical element, for example, a diaphragm, an iris, an image sensor, or the like may be used.

In addition, the above description has been given of an example in which the first operation mode is a shooting state of a moving image and the second operation mode is a shooting state of a still image, but the first operation mode and the second operation mode are respectively not limited to the shooting states of a moving image and a still image. The first operation mode and the second operation mode can be applied to various kinds of modes to be set in the imaging device 100, and for example, various kinds of modes such as a macro shooting mode, a night shooting mode, a backlight correction shooting mode, and a continuous shooting mode can be applied.

### <Present Technology>

The present technology may also be configured as below.
(1) An optical element driving device including:
   an interlock member configured to be operated by rotational force of a rotationally-manipulated manipulation ring, and operate an optical element by transmitting rotational force of the manipulation ring to the optical element,
   in which a changeover mechanism configured to change over an operation direction of the optical element with respect to a rotation direction of the manipulation ring is provided at least on the interlock member.
(2) The optical element driving device according to (1), in which settings of an operation mode in which the optical element is operated by rotating the manipulation ring, and a changeover transition mode in which an operation direction of the optical element is changed over by rotating the manipulation ring are enabled, and
   a mode change switch configured to perform changing between the operation mode and the changeover transition mode is provided.
(3) The optical element driving device according to (2), in which the manipulation ring includes an external ring and an internal ring positioned on an inside of the external ring,
   the external ring and the internal ring are made integrally rotatable in the operation mode, and
   by the external ring being rotated with respect to the internal ring in the changeover transition mode, the changeover mechanism is operated.
(4) The optical element driving device according to (3), in which the internal ring is made movable between a first position and a second position in a direction different from the rotation direction with respect to the external ring in the changeover transition mode, and
   an operation direction of the optical element is changed over in accordance with a movement position of the internal ring.
(5) The optical element driving device according to (4), in which a cam groove is formed in one of the external ring and the internal ring, and a cam pin to be slidably engaged with the cam groove is provided on another one thereof, and
   the internal ring is moved between the first position and the second position by a change in position of the cam pin with respect to the cam groove that is caused by rotation of the external ring with respect to the internal ring.
(6) The optical element driving device according to any of (1) to (5), in which a fixing member that includes a reverse gear and is configured to rotatably support the interlock member is provided,
   a transmission gear that can be meshed with the reverse gear is formed on the manipulation ring,
   the manipulation ring and the interlock member are rotated in opposite directions in a state in which the transmission gear is meshed with the reverse gear, and
   the manipulation ring and the interlock member are rotated in a same direction in a state in which the transmission gear is not meshed with the reverse gear.
(7) The optical element driving device according to (6), in which the interlock member is provided with an interlock pin that can be coupled with the manipulation ring,
   the interlock member is rotated integrally with the manipulation ring in a state in which the interlock pin is coupled with the manipulation ring, and
   the transmission gear is meshed with the reverse gear in a state in which coupling of the interlock pin with the manipulation ring is released.
(8) The optical element driving device according to (6) or (7), in which a driving gear meshed with the reverse gear is formed on the interlock member, and
   the rotational force of the manipulation ring is transmitted to the interlock member via the transmission gear and the reverse gear in a state in which the transmission gear is meshed with the reverse gear.
(9) The optical element driving device according to (8), in which the transmission gear is formed into a shape extending in the rotation direction, and
   the transmission gear is positioned on an outside of the driving gear in a state in which the transmission gear is meshed with the reverse gear.
(10) The optical element driving device according to any of (1) to (9), in which the optical element is made operable in a first direction and a second direction which are opposite to each other,
   by the manipulation ring being rotated in one direction in a first rotational manipulation range, the optical element is operated in the first direction, and by the manipulation ring being rotated in another direction in the first rotational manipulation range, the optical element is operated in the second direction, and
   by the manipulation ring being rotated in one direction in a second rotational manipulation range, the optical element is operated in the second direction, and by the manipulation ring being rotated in another direction in the second rotational manipulation range, the optical element is operated in the first direction.
(11) The optical element driving device according to (10), in which, on the manipulation ring, calibrations indicating the first rotational manipulation range and the second rotational manipulation range are added at positions distant in the rotation direction.
(12) The optical element driving device according to (1), in which the manipulation ring is made rotatable in a first rotation direction and a second rotation direction which are opposite to each other,
   the optical element is made operable in a first direction and a second direction which are opposite to each other,
   changeover between a first operation mode and a second operation mode is performed by the changeover mechanism,
   in the first operation mode, the optical element is operated in the first direction when the manipulation ring is rotated in the first rotation direction, and the optical element is operated in the second direction when the manipulation ring is rotated in the second rotation direction, and
   in the second operation mode, the optical element is operated in the second direction when the manipulation ring is rotated in the first rotation direction, and the optical element is operated in the first direction when the manipulation ring is rotated in the second rotation direction.
(13) The optical element driving device according to (12), in which a lens or a lens group is provided as the optical element,
   a shooting state of a moving image is set as the first operation mode, and a shooting state of a still image is set as the second operation mode.
(14) The optical element driving device according to (12) or (13), in which changeover between a manual state in which the optical element is operated by a manual rotational manipulation of the manipulation ring, and an automatic state in which the optical element is operated by drive force generated by a drive motor is enabled,
   a detection unit configured to detect the first operation mode and the second operation mode is provided, and
   an operation speed of the optical element in the automatic state is controlled on the basis of a detection result of the detection unit.
(15) The optical element driving device according to (13), in which changeover between a manual state in which the optical element is operated by a manual rotational manipulation of the manipulation ring, and an automatic state in which the optical element is operated by drive force generated by a drive motor is enabled,
   a zooming lens or lens group is provided as the optical element,
   a detection unit configured to detect the first operation mode and the second operation mode is provided, and
   control of causing the first operation mode to decline in an operation speed of the optical element in the automatic state, with respect to that in the second operation mode is performed on the basis of a detection result of the detection unit.
(16) The optical element driving device according to (13), in which changeover between a manual state in which the optical element is operated by a manual rotational manipulation of the manipulation ring, and an automatic state in which the optical element is operated by drive force generated by a drive motor is enabled,
   a focusing lens or lens group is provided as the optical element,
   a detection unit configured to detect the first operation mode and the second operation mode is provided, and
   control of causing the first operation mode to decline in an operation speed of the optical element in the automatic state, with respect to that in the second operation mode is performed on the basis of a detection result of the detection unit.
(17) The optical element driving device according to (13), in which changeover between a manual state in which the optical element is operated by a manual rotational manipulation of the manipulation ring, and an automatic state in which the optical element is operated by drive force generated by a drive motor is enabled,
   an iris blade is provided as the optical element,
   a detection unit configured to detect the first operation mode and the second operation mode is provided, and
   control of causing the first operation mode to decline in an operation speed of the optical element in the automatic state, with respect to that in the second operation mode is performed on the basis of a detection result of the detection unit.
(18) The optical element driving device according to any of (12) to (17), in which a first operation portion configured to operate the optical element in the first operation mode and a second operation portion configured to operate the optical element in the second operation mode are formed on the interlock member.
(19) The optical element driving device according to (18), in which a cam ring to be rotated in a same direction as the manipulation ring is provided as the interlock member, and
   the first operation portion and the second operation portion are formed into symmetric shapes at a distance in a rotation direction of the interlock member.
(20) An interchangeable lens including:
   an optical element driving device configured to drive an optical element and arranged inside a cylindrical casing,
   in which the optical element driving device includes
   an interlock member configured to be operated by rotational force of a rotationally-manipulated manipulation ring, and operate the optical element by transmitting rotational force of the manipulation ring to the optical element, and
   a changeover mechanism configured to change over an operation direction of the optical element with respect to a rotation direction of the manipulation ring is provided at least on the interlock member.
(21) An imaging device including:
   an optical element driving device configured to drive an optical element, and an image sensor configured to convert an optical image captured via an optical system into an electrical signal,
   in which the optical element driving device includes
   an interlock member configured to be operated by rotational force of a rotationally-manipulated manipulation ring, and operate the optical element by transmitting rotational force of the manipulation ring to the optical element, and
   a changeover mechanism configured to change over an operation direction of the optical element with respect to a rotation direction of the manipulation ring is provided at least on the interlock member.

### Reference Signs List

- 100: imaging device
- 204: image sensor
- 300: interchangeable lens
- 302: first manipulation ring
- 303: second manipulation ring
- 304: third manipulation ring
- 305: casing
- 308: optical element
- 1: optical element driving device
- 2: fixing member
- 3: interlock member
- 9: reverse gear
- 10: external ring
- 10a: cam pin
- 11: internal ring
- 14: mode change switch
- 15: cam groove
- 18: transmission gear
- 20: interlock pin
- 21: driving gear
- 22: detection unit
- 333: second manipulation ring
- 31: optical element driving device
- 32: fixing member
- 33: interlock member
- 60a: first operation portion
- 60c: second operation portion
- 44: mode change switch
- 87: lens group

## Claims

1. An optical element driving device comprising:
an interlock member configured to be operated by rotational force of a rotationally-manipulated manipulation ring, and operate an optical element by transmitting rotational force of the manipulation ring to the optical element,
wherein a changeover mechanism configured to change over an operation direction of the optical element with respect to a rotation direction of the manipulation ring is provided at least on the interlock member.

2. The optical element driving device according to claim 1, wherein settings of an operation mode in which the optical element is operated by rotating the manipulation ring, and a changeover transition mode in which an operation direction of the optical element is changed over by rotating the manipulation ring are enabled, and
a mode change switch configured to perform changing between the operation mode and the changeover transition mode is provided.

3. The optical element driving device according to claim 2, wherein the manipulation ring includes an external ring and an internal ring positioned on an inside of the external ring,
the external ring and the internal ring are made integrally rotatable in the operation mode, and
by the external ring being rotated with respect to the internal ring in the changeover transition mode, the changeover mechanism is operated.

4. The optical element driving device according to claim 3, wherein the internal ring is made movable between a first position and a second position in a direction different from the rotation direction with respect to the external ring in the changeover transition mode, and
an operation direction of the optical element is changed over in accordance with a movement position of the internal ring.

5. The optical element driving device according to claim 4, wherein a cam groove is formed in one of the external ring and the internal ring, and a cam pin to be slidably engaged with the cam groove is provided on another one thereof, and
the internal ring is moved between the first position and the second position by a change in position of the cam pin with respect to the cam groove that is caused by rotation of the external ring with respect to the internal ring.

6. The optical element driving device according to claim 1, wherein a fixing member that includes a reverse gear and is configured to rotatably support the interlock member is provided,
a transmission gear that can be meshed with the reverse gear is formed on the manipulation ring,
the manipulation ring and the interlock member are rotated in opposite directions in a state in which the transmission gear is meshed with the reverse gear, and
the manipulation ring and the interlock member are rotated in a same direction in a state in which the transmission gear is not meshed with the reverse gear.

7. The optical element driving device according to claim 6, wherein the interlock member is provided with an interlock pin that can be coupled with the manipulation ring,
the interlock member is rotated integrally with the manipulation ring in a state in which the interlock pin is coupled with the manipulation ring, and
the transmission gear is meshed with the reverse gear in a state in which coupling of the interlock pin with the manipulation ring is released.

8. The optical element driving device according to claim 6, wherein a driving gear meshed with the reverse gear is formed on the interlock member, and
the rotational force of the manipulation ring is transmitted to the interlock member via the transmission gear and the reverse gear in a state in which the transmission gear is meshed with the reverse gear.

9. The optical element driving device according to claim 8, wherein the transmission gear is formed into a shape extending in the rotation direction, and
the transmission gear is positioned on an outside of the driving gear in a state in which the transmission gear is meshed with the reverse gear.

10. The optical element driving device according to claim 1, wherein the optical element is made operable in a first direction and a second direction which are opposite to each other,
by the manipulation ring being rotated in one direction in a first rotational manipulation range, the optical element is operated in the first direction, and by the manipulation ring being rotated in another direction in the first rotational manipulation range, the optical element is operated in the second direction, and
by the manipulation ring being rotated in one direction in a second rotational manipulation range, the optical element is operated in the second direction, and by the manipulation ring being rotated in another direction in the second rotational manipulation range, the optical element is operated in the first direction.

11. The optical element driving device according to claim 10, wherein, on the manipulation ring, calibrations indicating the first rotational manipulation range and the second rotational manipulation range are added at positions distant in the rotation direction.

12. The optical element driving device according to claim 1, wherein the manipulation ring is made rotatable in a first rotation direction and a second rotation direction which are opposite to each other,
the optical element is made operable in a first direction and a second direction which are opposite to each other,
changeover between a first operation mode and a second operation mode is performed by the changeover mechanism,
in the first operation mode, the optical element is operated in the first direction when the manipulation ring is rotated in the first rotation direction, and the optical element is operated in the second direction when the manipulation ring is rotated in the second rotation direction, and
in the second operation mode, the optical element is operated in the second direction when the manipulation ring is rotated in the first rotation direction, and the optical element is operated in the first direction when the manipulation ring is rotated in the second rotation direction.

13. The optical element driving device according to claim 12, wherein a lens or a lens group is provided as the optical element,
a shooting state of a moving image is set as the first operation mode, and
a shooting state of a still image is set as the second operation mode.

14. The optical element driving device according to claim 12, wherein changeover between a manual state in which the optical element is operated by a manual rotational manipulation of the manipulation ring, and an automatic state in which the optical element is operated by drive force generated by a drive motor is enabled,
a detection unit configured to detect the first operation mode and the second operation mode is provided, and
an operation speed of the optical element in the automatic state is controlled on a basis of a detection result of the detection unit.

15. The optical element driving device according to claim 13, wherein changeover between a manual state in which the optical element is operated by a manual rotational manipulation of the manipulation ring, and an automatic state in which the optical element is operated by drive force generated by a drive motor is enabled,
a zooming lens or lens group is provided as the optical element,
a detection unit configured to detect the first operation mode and the second operation mode is provided, and
control of causing the first operation mode to decline in an operation speed of the optical element in the automatic state, with respect to that in the second operation mode is performed on a basis of a detection result of the detection unit.

16. The optical element driving device according to claim 13, wherein changeover between a manual state in which the optical element is operated by a manual rotational manipulation of the manipulation ring, and an automatic state in which the optical element is operated by drive force generated by a drive motor is enabled,
a focusing lens or lens group is provided as the optical element,
a detection unit configured to detect the first operation mode and the second operation mode is provided, and
control of causing the first operation mode to decline in an operation speed of the optical element in the automatic state, with respect to that in the second operation mode is performed on a basis of a detection result of the detection unit.

17. The optical element driving device according to claim 13, wherein changeover between a manual state in which the optical element is operated by a manual rotational manipulation of the manipulation ring, and an automatic state in which the optical element is operated by drive force generated by a drive motor is enabled,
an iris blade is provided as the optical element,
a detection unit configured to detect the first operation mode and the second operation mode is provided, and
control of causing the first operation mode to decline in an operation speed of the optical element in the automatic state, with respect to that in the second operation mode is performed on a basis of a detection result of the detection unit.

18. The optical element driving device according to claim 12, wherein a first operation portion configured to operate the optical element in the first operation mode and a second operation portion configured to operate the optical element in the second operation mode are formed on the interlock member.

19. The optical element driving device according to claim 18, wherein a cam ring to be rotated in a same direction as the manipulation ring is provided as the interlock member, and
the first operation portion and the second operation portion are formed into symmetric shapes at a distance in a rotation direction of the interlock member.

20. An interchangeable lens comprising:
an optical element driving device configured to drive an optical element and arranged inside a cylindrical casing,
wherein the optical element driving device includes
an interlock member configured to be operated by rotational force of a rotationally-manipulated manipulation ring, and operate the optical element by transmitting rotational force of the manipulation ring to the optical element, and
a changeover mechanism configured to change over an operation direction of the optical element with respect to a rotation direction of the manipulation ring is provided at least on the interlock member.

21. An imaging device comprising:
an optical element driving device configured to drive an optical element, and an image sensor configured to convert an optical image captured via an optical system into an electrical signal,
wherein the optical element driving device includes
an interlock member configured to be operated by rotational force of a rotationally-manipulated manipulation ring, and operate the optical element by transmitting rotational force of the manipulation ring to the optical element, and
a changeover mechanism configured to change over an operation direction of the optical element with respect to a rotation direction of the manipulation ring is provided at least on the interlock member.
